**Europäisches Patentamt**

**European Patent Office**

**Office européen des brevets**

(19)

(11) Publication number : **0 299 537 B1**

## EUROPEAN PATENT SPECIFICATION

(12)

(45) Date of publication of patent specification :
15.02.95 Bulletin 95/07

(51) Int. Cl.[6] : **G06F 19/00**

(21) Application number : **88111551.3**

(22) Date of filing : **18.07.88**

(54) **Apparatus and Method for processing digital signal.**

(30) Priority : **17.07.87 JP 179301/87**
**04.08.87 JP 194894/87**
**11.01.88 JP 3346/88**

(43) Date of publication of application :
**18.01.89 Bulletin 89/03**

(45) Publication of the grant of the patent :
**15.02.95 Bulletin 95/07**

(84) Designated Contracting States :
**DE FR GB NL**

(56) References cited :
**WESCON TECHNICAL PAPERS, 30th October
1984, pages 4/3/1-7; PERLMAN: "Bipolar and
CMOS Technologies become Partners in Digi-
tal Signal Processing"**
**IEEE MICRO, vol. 6, no. 6, December 1986,
pages 60-69; Eichen: "NEC'S muPD77230 Di-
gital Signal Processor"**
**ICASSP 86 PROCEEDINGS, April 1986, Tokyo,
Japan, pages 413-416; TSUJIMICHI: "A Next
Generation 32-bit VLSI Signal Processor"**
**ELECTRONICS, vol. 52, no. 26, December
1979, pages 109-115; SCHIRM: "Packing a
signal processor onto a single digital board"**

(56) References cited :
**SPEECH TECH '86, PROCEEDINGS, April 1986,
New York, US, Media Dimensions Inc. pages
35-38; GASS: "TMS32020 - The Quick and
easy solution to DSP problems"**

(73) Proprietor : **SANYO ELECTRIC CO., LTD.**
**18, Keihanhondori 2-chome**
**Moriguchi-shi Osaka-fu (JP)**

(72) Inventor : **Fukuda, Mituyoshi**
**Yoshida Danchi F2-6, 956-4 Yoshida**
**Ohizumi-machi Ohra-gun Gunma-ken (JP)**
Inventor : **Shimizu, Masahisa**
**5-2-1210, Kikugaokaminami-machi**
**Hirakata-shi Osaka-fu (JP)**
Inventor : **Ohashi, Hideki**
**4, Kinugasasoumon-cho**
**Kita-ku**
**Kyoto-shi Kyoto-fu (JP)**
Inventor : **Kawaguchi, Masaki**
**Daiichi Tamiya-ryo**
**10-49 Asahigaoka-cho**
**Hirakata-shi Osaka-fu (JP)**

(74) Representative : **Kahler, Kurt, Dipl.-Ing.**
**Patentanwälte Kahler, Käck, Fiener & Sturm**
**P.O. Box 12 49**
**D-87712 Mindelheim (DE)**

## Description

The present invention relates to an apparatus and method for processing a digital signal. More specifically, the present invention relates to an apparatus and method for processing a digital signal, in which data being inputted in time series fashion is processed in accordance with a predetermined algorithm and outputted as time series data.

### Description of the prior art

In general, the greater part of original information source such as sound or image being in existence in the circumstances is an analog signal. A system for processing the analog signal in a digital manner is called a digital signal processing system (DSP system).

Recently, as technology for making a digital circuitry into an LSI rapidly progresses, it becomes easy to implement the DSP system on a single chip of a semiconductor device. Furthermore, such a DSP system has many advantages in that it is possible to process with accuracy higher than that of processing in an analog manner, that a desired characteristic can be equally and stably obtained by setting suitable parameters therein, and that it is possible to make a circuit an adjustment free-circuit, and therefore, the DSP system becomes to be rapidly put to practical use. In addition, the application domain of the DSP system is extended, and the DSP system is widely utilized in a system for processing signals such as a sound signal, communication signal, measurement signal, image signal, earthquake wave signal, underwater sound signal, etc.

Furthermore, in a field of audio equipments such as a CD (compact disk) player and a DAT (digital audio tape) player, as digital processing of an audio signal progresses, the DSP system which processes the audio signal in a digital manner is put into practice.

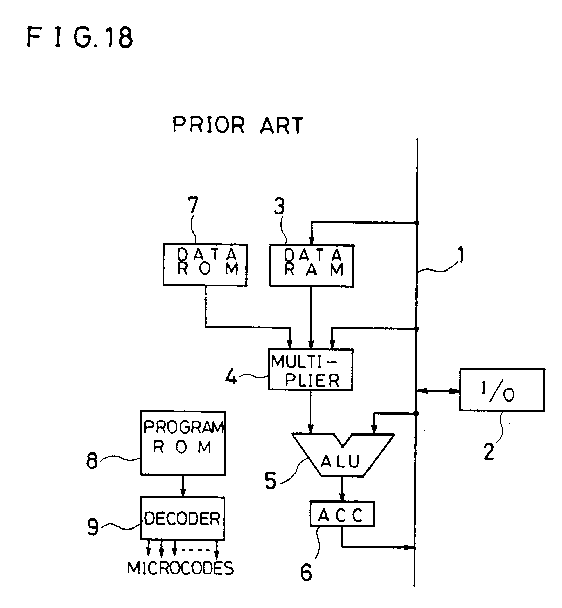

A conventional DSP system has architecture as shown in Fig. 18 so as to easily form a digital filter. In Fig. 18, an input/output circuit (I/O) 2, a data RAM 3, a multiplier 4, an arithmetic and logic unit (ALU) 5, an accumulator 6 etc. are connected to a data bus 1. Outputs of the data RAM 3 and a data ROM 7 are connected to the multiplier 4, and an output of a multiplied result from the multiplier 4 is applied to one input of the ALU 5. These circuits are controlled by microcodes which are outputted correspondingly to instructions from a decoder 9 which decodes instructions being sequentially read from a program ROM 8.

In implementing a digital filter, product and sum operation in the form of $Y = AX_i + BX_{i-1} + CX_{i-2}$ --- appears repeatedly. In the case where such a digital filter is implemented by the DSP system, order of calculation for node points of the filter is determined and a program is prepared in accordance with the order, and the program is stored in the program ROM 8. On the other hand, coefficients for the calculation formula are stored in the data ROM 7. Then, as the program is executed, a series of the product and sum operation are made, and results of the operation are sequentially stored in the data RAM 3.

In the case where the DSP system as shown in Fig. 18 is used in the audio equipments, it is possible to implement functions necessary for the audio equipments such as a graphic-equalizer function, bass/treble function, loudness function, low-boost function, surround effect function and etc. However, since the audio signal includes two-channel signal of a left channel and a right channel, in order to implement the above described functions, the left channel signal and the right channel signal must be respectively processed by the DSP system. In addition, in order to independently change characteristics of the left channel and the right channel, it is necessary to write two sets of coefficients being different from each other in the data ROM.

A frequency for sampling a signal is a high frequency of, for example, 44.1 kHz or 48 kHz in the CD player or DAT player. On the other hand, it is necessary to completely terminate all of the processings for the left channel and the right channel for implementing the above described functions during each sampling period. Therefore, in accordance with the processing rate of the DSP system, there is a case where any of the above described functions can not be implemented. That is, there was a disadvantage that throughput of the DSP system becomes bad.

Similarly, IEEE Micro, vol.6, no.6, Dec.1986, pages 60-69 discloses a digital signal processing apparatus comprising only one set of components, such as RAMs, ROMs, multiplier, ALU etc.

## SUMMARY OF THE INVENTION

Therefore, it is the object of the present invention to provide a novel apparatus and method for processing digital signals with higher throughput and more versatile functions.

The apparatus of the invention is characterized in claim 1; the method of the invention is characterized in claim 12.

It should be noted that the invention does not just provide a duplication of known apparatuses; rather, it is the interaction between the pair of digital processing means and the control means which essentially contribute to the solution of the object stated above.

In principle, an apparatus in accordance with the present invention comprises a pair of data buses which transfer digital data; a pair of digital processing means respectively connected to corresponding one of the data buses; control means which simultaneously controls operation of the pair of digital processing means in accordance with procedure being programmed in advance; external storage interface means which sends address data to an external storage so as to send or receive digital data to or from the external storage; interface means which receives a plurality of digital data being applied from the external storage in accordance with a control signal being applied from the outside and transfers the plurality of digital data onto the pair of data buses in accordance with predetermined order and outputs such processed data being sent onto the pair of data buses to the outside; storage control register means for controlling whether or not the digital data being sent from the interface means onto the pair of data buses are to be stored inside of the pair of digital processing means; digital data exchanging means for exchanging the digital data between the pair of data buses; and conditional jump control means in which the data being sent onto one or both of the pair of data buses is set and which controls jump condition based upon the data.

The above described digital processing means includes storing means for storing address data for cyclically accessing specific storage areas of the external storage, constants "1", "a" and "b" for producing coefficients to be multiplied into the inputted digital data, coefficients for constructing a digital filter, digital data before and during processing, and etc.; multiplying means; and arithmetic operation means.

In addition, the control means includes program memory means for storing the program; program counter means for designating an address of the program memory means; decoder means for decoding instructions being read from the program memory means; jump address means which is connected to one or both of the pair of data buses and in which address data of the address to which the process is to be jumped (hereinafter, simply called "jump address"); multiplexer means for selectively applying the jump address set in the jump address means to the program counter means; and a loop counter which is connected to one or both of the pair of data buses and in which the number of times when the same instruction is repeatedly executed.

In the case where the specific storage area is to be cyclically accessed through the external storage interface means, the address data is read from the storing means of the digital processing means and incremented or decremented by the arithmetic operation means, and an operated result thereof is outputted when the operated result is not a boundary of the specific storage area. When the operated result is the boundary of the specific storage area, operation for outputting a predetermined value being stored in the storing means is performed in accordance with a single instruction, and the address data being outputted is transferred to the storing means again and a starting address of the specific storage area is added to the address data to form actual address data. Such actual address data is sent to the external storage interface means. Thus, it becomes easy to access to the external storage.

In the case where overflow occurs while the digital data inputted from the outside is processed by the digital processing means, in order to adjust the coefficients to be multiplied into the digital data being succeedingly inputted, the constants "1", "a" and "b" (a<1 and b>1) stored in the storing means are selected, selected one of the constants is multiplied into the coefficients at that time, whereby a level of the inputted digital data can be adjusted such that no overflow occurs.

In the case where the digital data is to be written in the storing means of the digital process means from the outside, the digital data to be written and composite data which includes a value representative of the number of the data, the address in which the data to be written and the data for designating any one of the pair of digital process means are applied to the interface means and held therein. The composite data is first fetched from the interface means and respective data are set into the loop counter means of the control means, the addressing means for addressing the address of the storing means and the storage control register means, and then, in accordance with these data being set, the digital data to be written of only the number of the data are fetched from the interface means and written into the storing means. Thus, it becomes easy to transfer the digital data from the outside.

Furthermore, by means of the digital data exchanging means, it is possible to exchange the digital data being sent onto the pair of data buses, or internal data of the pair of digital processing means through execution of a single instruction.

By setting the jump address in the jump address register means being provided within the control means from the outside via the interface means, since the address data of the jump address register means is transferred to the program counter means when the jump instruction or conditional jump instruction is to be executed, it is possible to control the stream of the program from the outside.

Furthermore, since the jump control signal is generated through selection of the outputs of flag means connected to the respective digital processing means in accordance with the data being set in condition setting register means which is provided within the conditional jump control means, it is possible to select in accordance with the program or the data from the outside the case where the condition is settled with respect to only one of the digital process means or only the other digital process means, the case where the condition is settled with respect to any one of the digital process means, or the case where the condition is settled with respect to the both of the digital process means.

In accordance with the above described action or operation, it is possible to increase functionality and efficiency of the operation, thereby the throughput of the digital signal processing apparatus will be increased.

The objects and other objects, features, aspects and advantages of the present invention will become more apparent from the following detailed description of the embodiments of the present invention when taken in conjunction with accompanying drawings.

BRIEF DESCRIPTION OF THE DRAWINGS

Fig. 1 is a block diagram showing one embodiment in accordance with the present invention.

Fig. 2 through Fig. 4 are block diagrams showing details of Fig. 1 block diagram.

Fig. 5 is an illustrative view showing storage areas of an external storage.

Fig. 6 is an illustrative view showing composite data to be applied to a DSP system as shown in Fig. 1 from the outside.

Fig. 7 is a schematic diagram showing internal circuit of the block diagram as shown in Fig. 1.

Fig. 8 is a schematic diagram showing an address pointer as shown in Fig. 1.

Fig. 9 is an illustrative view showing instructions necessary for constructing a digital filter.

Fig. 11, Fig. 13 and Fig. 14 are schematic diagrams showing a digital filter.

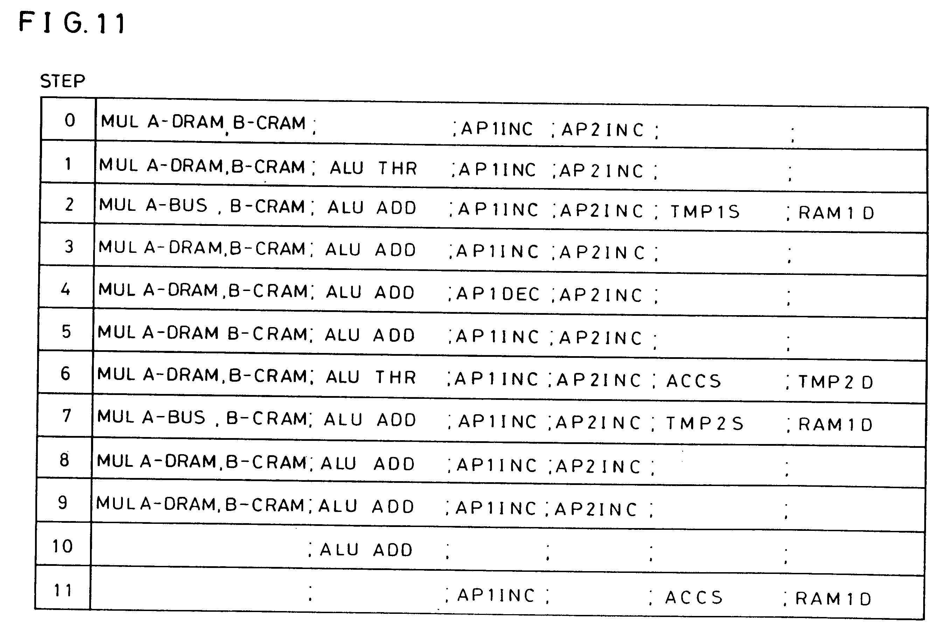

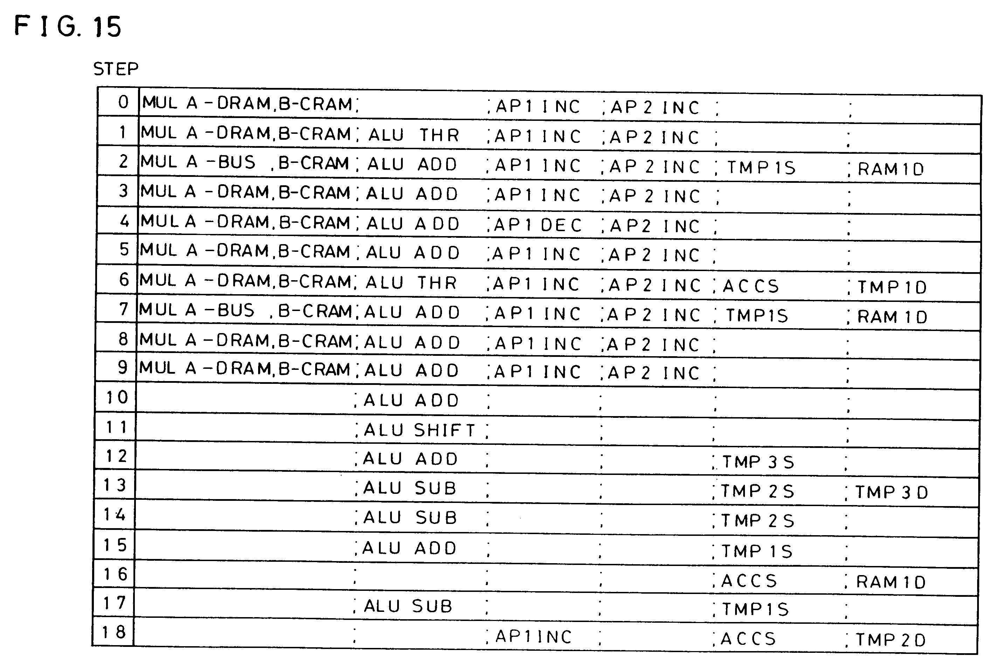

Fig. 11 and Fig. 15 are illustrative views showing a program for implementing a digital filter.

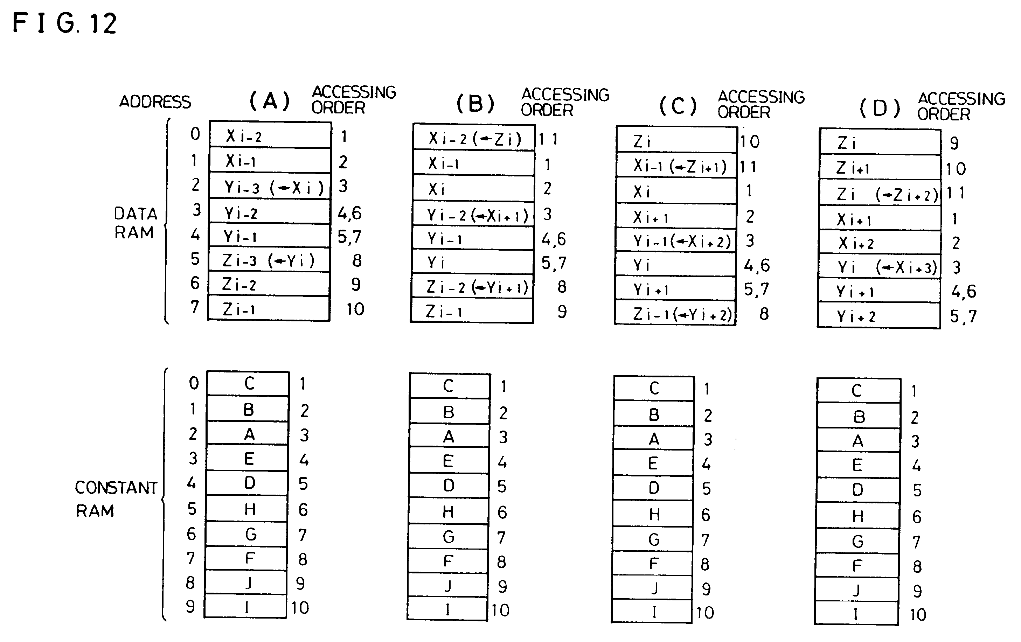

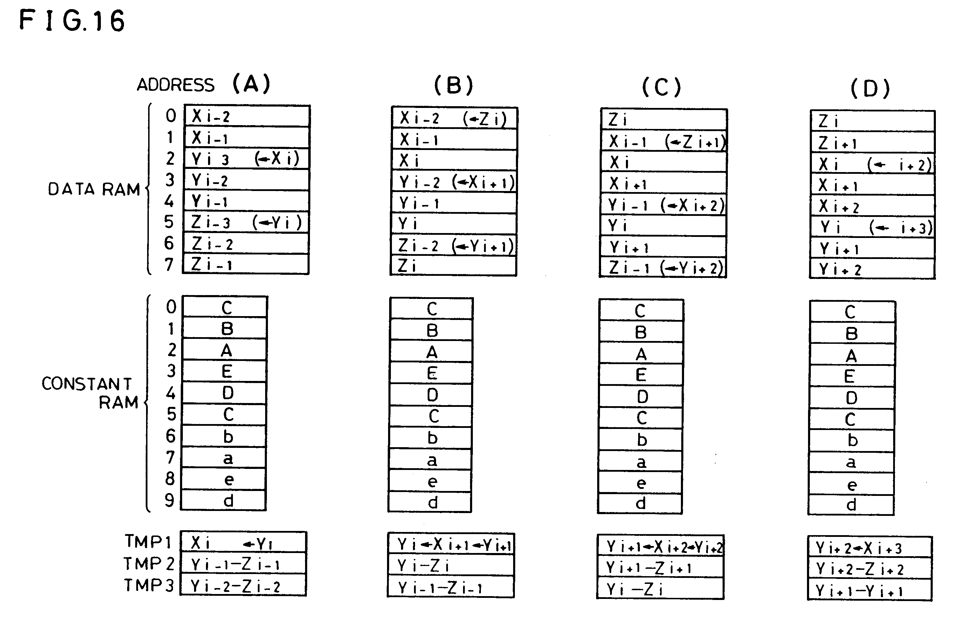

Fig. 12 and Fig. 16 are illustrative views showing assignment of address for a data RAM and constant RAM in implementing a digital filter.

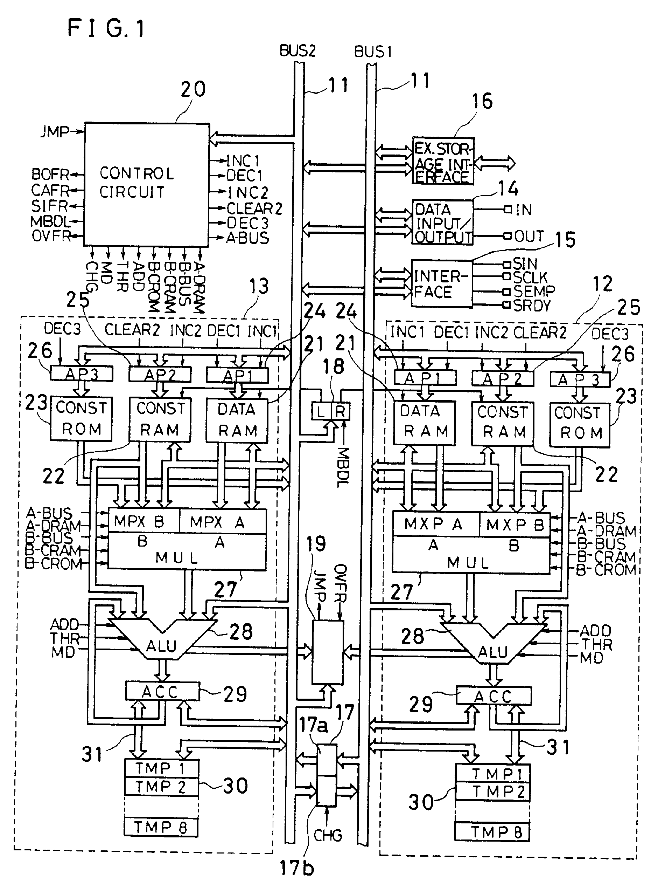

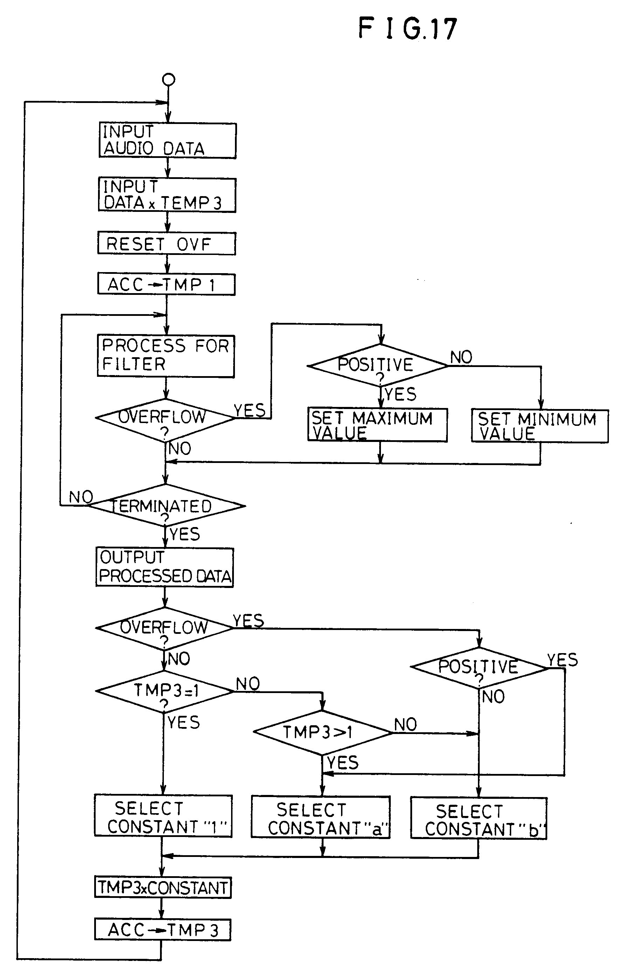

Fig. 17 is a flowchart showing an operation of one function of the embodiment as shown in Fig. 1.

Fig. 18 is a block diagram showing a conventional example.

DETAIL DESCRIPTION OF THE PREFERRED EMBODIMENT

Fig. 1 is a block diagram showing one embodiment in accordance with the present invention, wherein a DSP system for processing an audio signal is illustrated. The DSP system of this embodiment includes a pair of data buses (BUS1, BUS2) 11; digital processing circuits 12 and 13 which are connected to corresponding one of the data buses 11; a data input/output circuit 14 which is connected to the data buses 11; an interface circuit 15; an external storage interface circuit 16; a data exchanging register 17; a storage control register 18 which is connected to the data bus BUS2; a conditional jump control circuit 19; and a control circuit 20 which is connected to the data bus BUS2 and controls operation of respective above described circuits. Such a DSP system is preferably integrated on a single chip of the semiconductor device.

The data buses 11 are constructed as 24 bits (= 8 bits x 3), respectively. The data input/output circuit 14 is a circuit which inputs in a time series fashion sampling data of 16 bits of a left channel and a right channel (for example, in the case of the CD player, the digital data sampled by the sampling frequency of 44.1 kHz) being applied to an input terminal IN from the outside, and outputs the data of the right channel and the left channel to the data bus 11, respectively, and receives the right channel data which has been processed and sent onto the data bus BUS1 and the left channel data which has been processed and sent onto the data bus BUS2, and alternately outputs the same from an output terminal OUT in a time series fashion.

The data processing circuits 12 and 13 are utilized for processing the sampling data of the right channel and the left channel, respectively, and the both of them have the completely same configuration. More specifically, each of the data processing circuits 12 and 13 includes a data RAM 21; a constant RAM 22; a constant ROM 23; address pointers 24, 25 and 26; a multiplier (MUL) 27; an ALU 28; an accumulator (ACC) 29; and temporary registers (TMP1-TMP8) 30.

The data RAM 21 has a capacity of 24 bits by 128 such that the data is sent from the data input/output circuit 14 and has not been processed, and the data which has been processed can be stored therein. The data RAM 21 is connected to the data buses 11 and an input A of the multiplier 27. The constant RAM 22 has a capacity of 16 bits by 256 such that coefficients for a digital filter being sent from the interface circuit 16, the address data for the external storage (not shown) which is connected thereto via the external storage interface circuit 16, and etc. can be stored therein. The constant RAM 22 is connected to the data buses 11, an input B of the multiplier 27 and an input of the ALU 28. In addition, the constant ROM 23 is a read only memory which has a capacity of 24 bits by 256 and fixedly stores a starting address data of specific storage areas of the external storage and an address width or length thereof, the constants "1", "a" (for example, a=0.99) and "b" (for example, b=1.01) for producing the coefficients to be multiplied into the digital data being sent from the data input/output circuit 14, a maximum value and a minimum value to be set when overflow occurs in multiplying or making arithmetic operation, and etc. The constant ROM 23 is connected to the data buses 11 and an input B of the multiplier 27.

The address pointer 24 is constructed as 8 bits and designates an address of the data RAM 21. The address pointer 24 is controlled in accordance with the microcodes INC1 and DEC1 being outputted from the control circuit 20 and has a function for incrementing (+1) or decrementing (-1) the address data being held therein and a cyclic addressing function for cyclically addressing between the addresses of "0" and a set value. In addition, the address pointer 25 is a pointer of 10 bits and designates an address of the constant RAM 22. The address pointer 25 is controlled in accordance with the microcode INC2 being outputted from the control circuit 20 and has a function for incrementing the address data and a function that the same is cleared as "0" in accordance with the microcode CLEAR2 being outputted from the control circuit 20. Furthermore, the address pointer 26 is a pointer of 8 bits and designates an address of the constant ROM 23. The address pointer 26 has a function for decrementing the address data in accordance with the microcode DEC 3 being outputted from the control circuit 20.

The multiplier 27 is a circuit for multiplying the A input of 24 bits into the B input of 16 bits, and a multiplied result thereof is established after one execution cycle. Furthermore, input selection circuits MPXA and MPXB are provided at the A input and the B input of the multiplier 27. The input selection circuit MPXA selects and the data buses 11 in accordance with the microcode A-BUS from the control circuit 20, or the data RAM 21 in accordance with the microcode A-DRAM to apply the same to the A input. The input selection circuit MPXB selects the data buses 11 in accordance with the microcode B-BUS, the constant RAM 22 in accordance with the microcode B-CRAM, or the constant ROM 23 in accordance with the microcode B-CROM to apply the same to the B input. A result of the multiplication is outputted as 32 bits.

The ALU 28 is an operation circuit of 32 bits and performs adding the multiplied result of 32 bits being inputted to one input thereof to the data of 32 bits being inputted from the ACC 29 to the other input thereof in accordance with the microcode ADD, and transfers an added result thereof to the ACC 29. The most significant 24 bits of 32 bits of the ACC 29 are connected to the data buses 11 and the least significant 8 bits thereof are connected to the least significant 8 bits of a temporary register 30 by means of an auxiliary bus 31. The temporary register 30 is consist of registers TMP1, TMP2, ---, TMP8 each of which is a register of 32 bits. Therefore, the temporary register 30 can store or hold the data of 32 bits up to eight at a maximum. The most significant 24 bits of the respective one of the data are connected to the data buses 11. The data of 32 bits can be transferred between the temporary register 30 and the ACC 29 through the data buses 11 and the auxiliary bus 31.

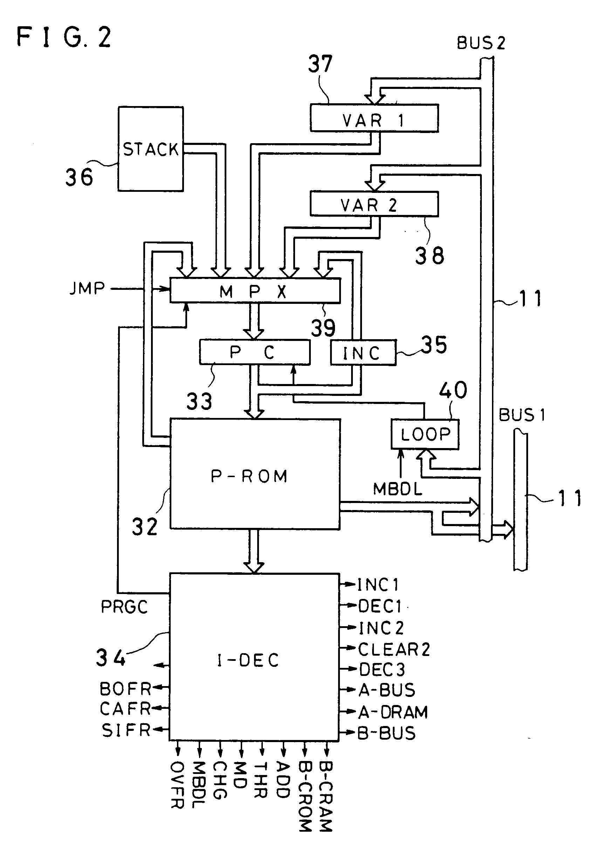

The control circuit 20 controls the respective circuits in accordance with the procedure being programmed in advance. As shown in Fig. 2, the control circuit 20 includes a program ROM (P-ROM) 32 which stores a program including combination of instruction codes, and a program counter (PC) 33 which points or designates an address of the program ROM 32. Instructions being read from the program ROM 32 are decoded by an instruction decoder (I-DEC) 34 which outputs a various kinds of control signals in accordance with the instructions. The control circuit 20 further includes an incrementor (INC) 35 which increments address data of the program counter 33; a stack 36 which stores an address to which the process is to be returned after processing an interruption; jump address registers (VAR1, VAR2) 37 and 38 which are connected to the data bus BUS2 and to which address data of a jump address is preset; a multiplexer (MPX) 39 which selects any one of an output of the incrementor 35, an output of the stack 36, outputs of the jump address registers 37 and 38, and address data being stored in the program ROM 32; and a loop counter (LOOP) 4) in which the number of times when the same instruction is to be repeatedly executed while the data of the program counter 33 remains as it is.

The program ROM 32 has a capacity of 32 bits by 512, in which a program for implementing the digital filter, a program for addressing the external storage being connected to the outside, a program for fetching the digital data from the interface circuit 55 and other necessary programs are stored. In addition, it is possible to send the digital data and address data being included in the instruction code which has been read from the program ROM 32 onto the data buses 11. The instruction decoder 34 outputs control signals INC1, INC2, DEC1, CLEAR2 and DEC3 which control the address pointers 24, 25 and 26; control signals A-BUS, A-DRAM, B-BUS, B-CRAM and B-CROM which control the input selection circuits MPXA and MPXB; control signals ADD, THR and MD which control the ALU 28; a control signal CHG which controls the data exchanging register 17; control signals OVFR, SIFR, CAFR, BOFR, which control the conditional jump control circuit 19; MBDL which controls the storage control register 18; and etc. In addition, selecting operation of the multiplexer 39 is controlled in accordance with a jump control signal JMP which is outputted from the conditional jump control circuit 19 and control signal PRGC which is outputted from the instruction decoder 34 when the jump instruction, skip instruction, return instruction, or the like is executed. The loop counter 40 is connected to the data bus BUS2 and inputs the data being sent onto the data bus BUS2 in accordance with a control signal MBDL which is outputted from the instruction decoder 34 when the initial transfer instruction is executed in fetching the data from the interface circuit 15.

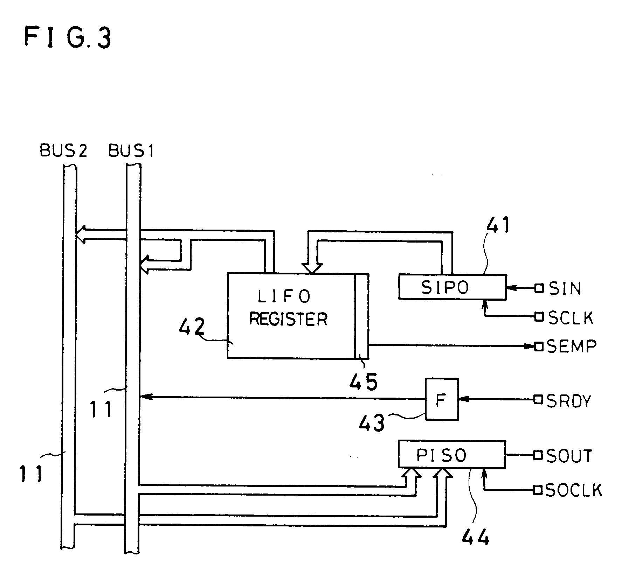

The interface circuit 15 sends and receives the data between the DSP system and the external control device, for example, a microcomputer (not shown). As shown in Fig. 3, the interface circuit 15 includes and input register (SIPO) 41, a holding register (LIFO) 42, a transfer termination flag (F) 43 and an output register (PISO) 44. The input register 41 is a shift register of 16 bits which receives serial input data SIN being applied from the microcomputer in accordance with the synchronization clock SCLK. When the data input of 16 bits is terminated, the inputted digital data is held in the holding register 42 by means of a parallel output from the input register 41. The holding register 42 is a register having a capacity of 16 bits by 8 and eight addresses of the holding register 42 are addressed by an address pointer 45. The address pointer 45 is incremented for each time when the holding register 42 is to be written and decremented for each time when the holding register 42 is to be read. Accordingly, in reading the holding register 42, the digital data is fetched in the order that is in reverse of the writing order. As a result of the reading the holding register 42, when the address pointer 45 becomes "0", a signal SEMP representative of termination of such reading is outputted to the microcomputer. On the other hand, the microcomputer applies a termination signal SRDY in response to termination of transfer of the data and sets the transfer termination flag 43. The output register 44 is a shift register of 16 bits which is connected to the data buses (BUS1, BUS2) 11. The output register 44 receives the data being transferred onto the data buses 11 in a parallel fashion and outputs serial data SOUT in accordance with the transfer clock SOCLK from the microcomputer.

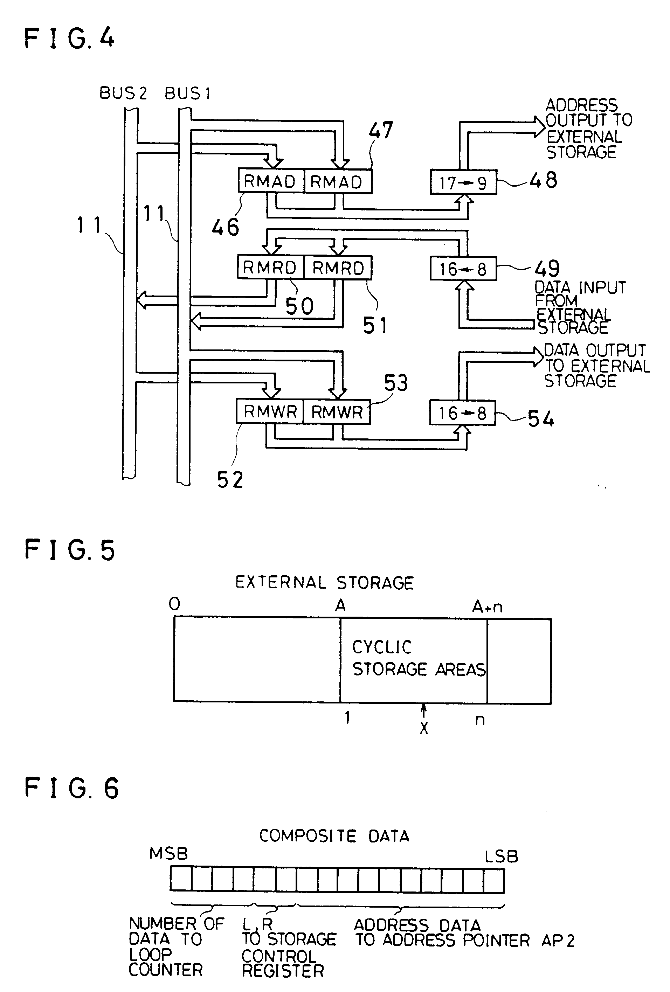

The external storage interface circuit 16 is a circuit for addressing and sending or receiving data between the DSP system and the external storage being connected to the outside thereof. As shown in Fig. 4, the external storage interface circuit 16 includes address holding registers (RMAD) 46 and 47 which are connected to the data buses 11; an output register 48 which is connected to the address holding registers 46 and 47; an input register 49 which inputs the digital data being fetched from the external storage (not shown); input data holding registers (RMRD) 50 and 51 which are connected to the input register 49 and the data buses 11; output data holding registers (RMWR) 52 and 53 which are connected to the data buses 11; and an output register 54.

Each of the address holding registers 46 and 47 is a register of 17 bits. The address data of 17 bits is divided into 9 bits and 8 bits which are applied from the output register 48 to the external storage at different timing. The data of 16 bits being read from the external storage is divided into a couple of 8 bits data which are applied to the input register 49, and the input register 49 combines the couple of 8 bits data into the data of 16 bits and applies the same to the input data holding registers 50 and 51. In addition, the output data holding registers 52 and 53 consist of 16 bits, respectively, and hold the output data being sent onto the data buses 11 and output the same to the output register 54. The output data of 16 bits is divided into a couple of 8 bits data which are outputted from the output register 54 to the external storage.

In this embodiment shown, the external storage is utilized for producing echoes and reverberations. Storage area of the external storage is divided or assigned as shown in Fig. 5. In Fig. 5, address "0" through "A-1" of the external storage are areas for producing primary echo, secondary echo, tertiary echo, ---, m-ry echo and utilized for delaying the digital data of the audio signal. Areas of address "A" through "A + n" are areas for producing the reverberations. Such addresses "A" through "A + n" can be cyclically accessed in accordance with independent address data "0" through "n". Such processing will be described later.

Returning to Fig. 1, the data exchanging register 17 includes a R/L register 17a which is a register of 24 bits and holds the data being sent onto the data bus BUS1 and outputs the same onto the data bus BUS2, and an L/R register 17b which is a register of 24 bits and holds the data being sent onto the data bus BUS2 and outputs the same onto the data bus BUS1. Holding and outputting of the data are simultaneously performed in the R/L register 17a and L/R register 17b during a single instruction cycle in accordance with a control signal CHG which is outputted from the control circuit 20 in executing the data exchanging instruction. Therefore, by means of the data exchanging register 17, it is possible to exchange the digital data of the right channel and the left channel with each other such that multiplication a predetermined coefficient into the data of opposite channel and adding or subtracting the same to or from own digital data can be performed. Therefore, it is possible to easily perform processing of adjustment of expansion of the sounds of the left and right channels.

The storage control register 18 is a register of 2 bits in which the data of 2 bits is set in accordance with a control signal MBDL which is outputted from the control circuit 20 when the transfer instruction for fetching the data from the interface circuit 15 is executed. The output of 2 bits from the storage control register 18 is applied to the data RAM 21 and the constant RAM 22 of the respective digital processing circuits 12 and 13 to control writing operation thereof. That is, the control of writing operation is performed when the transfer instruction for transferring the data fetched from the interface circuit 15 to the data RAM 21 or the constant RAM 22 is executed. For example, in the case where the coefficients for the digital filter which have been written in the constant RAM 22 is to be changed or modified, in order to change the right channel and left channel at one time, "1" may be set in advance in the respective bits of the storage control register 18, and in order to change the right channel and the left channel independently, "1" may be set in the bit corresponding to the channel to be changed and "0" may be set in the other bit. Data setting into the storage control register 18 is performed at the same time when data are set into the loop counter 40 (Fig. 2) of the control circuit 20 and the address pointers 24 and 25. More specifically, when the data is transferred to the holding register 42 (Fig. 3) of the interface circuit 15, the microcomputer lastly transfers the composite data consisting of the data representative of the number of data, the address data representative of the starting address into which the data is to be written, and the data representative of the right channel or the left channel.

In assignment of the composite data, as shown in Fig. 6, the least significant 10 bits of data of 16 bits represents the address data, the most significant 4 bits represents the number of the data, and the remaining 2 bits is the data for designating the right channel or the left channel. Therefore, when the data is to be fetched from the interface circuit 15, first, the transfer instruction for transferring the data to the loop counter 40, the address pointer 25, and the storage control register 18 is executed such that the composite data is fetched so as to be set in the respective registers, and then, data transfer based upon the contents of the composite data is performed in executing the next transfer instruction.

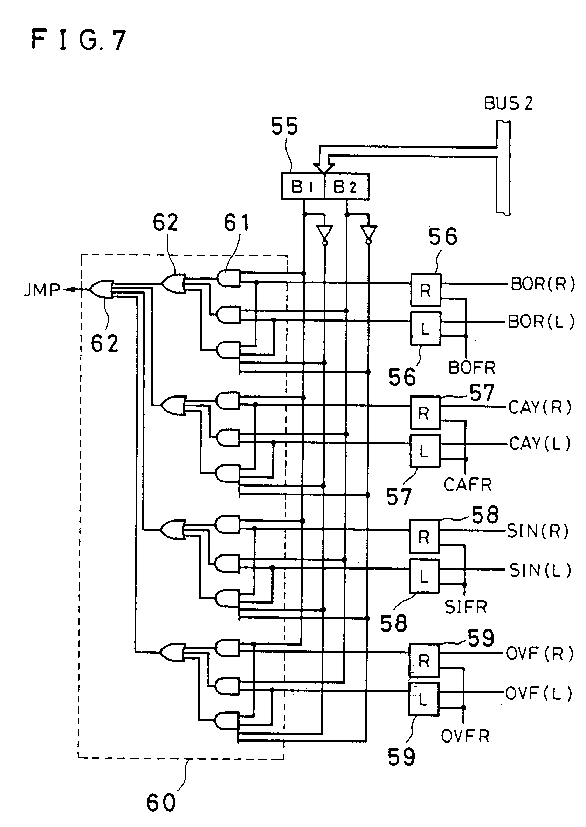

The conditional jump control circuit 19 selects a signal which is outputted when the digitally processed outputs of the ALUs 28 of the respective digital processing circuits 12 and 13 become a predetermined condition, based upon the data which is applied from the data bus BUS2 to generate a jump control signal JMP. As shown in Fig. 7, the conditional jump control circuit 19 includes a condition setting register (B1, B2) 55 of 2 bits; borrow flags (R, L) 56 which are set by borrow signals BOR (R, L) outputted from the respective ALUs 28; carry flags (R, L) 57 which are set by carry signals CAY (R, L) outputted from the ALUs 28; sign flags (R, L) 58 which are set by sign signals SIN (R, L) which are outputted from the ALUs 28 and represent that the data of a result of processing in the ALU 28 is minus; overflow flags (R, L) 59 which are set by overflow signals OVF (R, L) which are outputted from the ALUs 28 when overflow occurs in the digital data, that is, when the digital data becomes "7FFFFFFF" (36 bits) or more, and when negative overflow occurs in the digital data, that is, when the digital data becomes "80000000" (36 bits) or less; and a selection circuit 60 which is controlled by the outputs of 2 bits from the condition setting register 55 and the inverted outputs thereof so as to select outputs of (R) and (L) respective flags 56, 57, 58 and 59. The selection circuit 60 includes AND gates 61 and OR gates 62 which are connected as shown in Fig. 6.

In the case where B1 and B2 of the condition setting register 55 are respectively "1", when one of (R) and (L) of respective flags 56, 57, 58 and 59 is set, the jump control signal JMP is outputted. In the case where B1 and B2 are "1" and "0" respectively, the jump control signal JMP is outputted only in the side of (R) of the respective flags 56, 57, 58 and 59 in accordance with a condition of the digital processing circuit 12. Inversely, in the case where B1 and B2 are "0" and "1" respectively, the jump control signal JMP is outputted only in the side of (L) of the respective flags 56, 57, 58 and 59 in accordance with a condition of the digital processing circuit 13. In the case where B1 and B2 are both "0", the jump control signal JMP is outputted only when the both of (R) and (L) of the respective flags 56, 57, 58 and 59 are set. Thus, it is possible to set a condition that the process is to be jumped in accordance with the contents of the data which is set in the condition setting register 55.

In addition, the borrow flags 56, carry flags 57 and sign flags 58 are respectively reset in response to reset signals BOFR, CAFR and SIFR which are outputted from the instruction decoder 34 of the control circuit 20 at the last timing in the execution cycle of the conditional jump instruction. However, the overflow flags 59 are not reset in the execution cycle of the conditional jump instruction based upon the overflow flag but reset by the control signal OVFR which is outputted from the instruction decoder 34 in response to execution an independent overflow flag reset instruction.

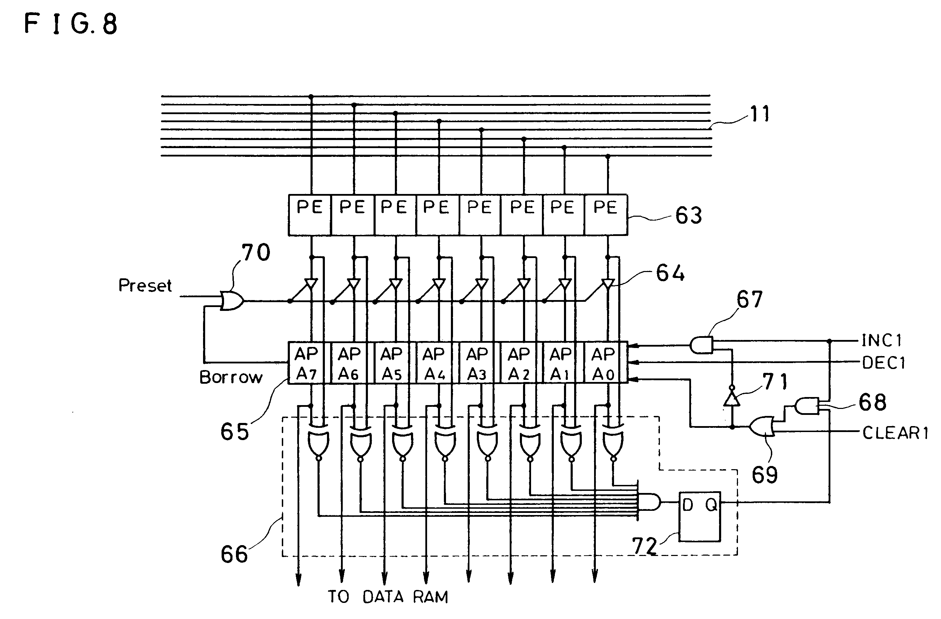

Fig. 8 is a concrete schematic diagram of the address pointer 24 which is shown in Fig. 1. The address pointer 24 includes a data latch register 63 of 8 bits preset inputs PE of which are respectively connected to the least significant 8 bits of the data buses 11; gates 64 which send an output of the data latch register 63; a pointer register 65 to an input AP of which the data being sent from the gates 64 is applied; a coincidence detection circuit 66 to which the outputs of the data latch register 63 and the pointer register 65 are applied and which detects the both of the data become coincident with each other; AND gates 67 and 68 which control increment, decrement, clear, preset or the like of the point register 65; OR gates 69 and 70; and an inverter 71. The outputs A0 - A7 of the pointer register 65 are outputted as the address data of the data RAM 21.

In Fig. 8, by an initialization program which is executed in turning on the electric power source of the DSP system, setting address, for example, "7" is preset in the data latch register 63, and the pointer register 65 is reset as "0" in accordance with the control signal CLEAR1. When the product and sum operation is executed to implement the digital filter, if the control signal INC1 is outputted, the value of the pointer register 65 is incremented (+1), and if the control signal DEC1 is outputted, the same is decremented (-1). When a result of increment reaches the value, for example, "7" being preset in the data latch register 63, coincidence is detected by the coincidence detection circuit 66, and a detection output becomes "1" which is stored D-FF 72. In this state, if the control signal INC1 is outputted again, the pointer register 65 is cleared through the AND gate 68 and OR gate 69 so as to be reset as "0". On the other hand, as a result of decrement, if borrow occurs, the gates 64 are opened through the OR gate 70 and the value, for example, "7" being preset in the data latch register 63 is set in the pointer register 65. Thus, cyclic addressing function that addresses are cyclically changed between a predetermined address "0" and a set address ("7" in this case) is obtainable.

Configuration of the address pointer 25 is similar to that of the above described address pointer 24.

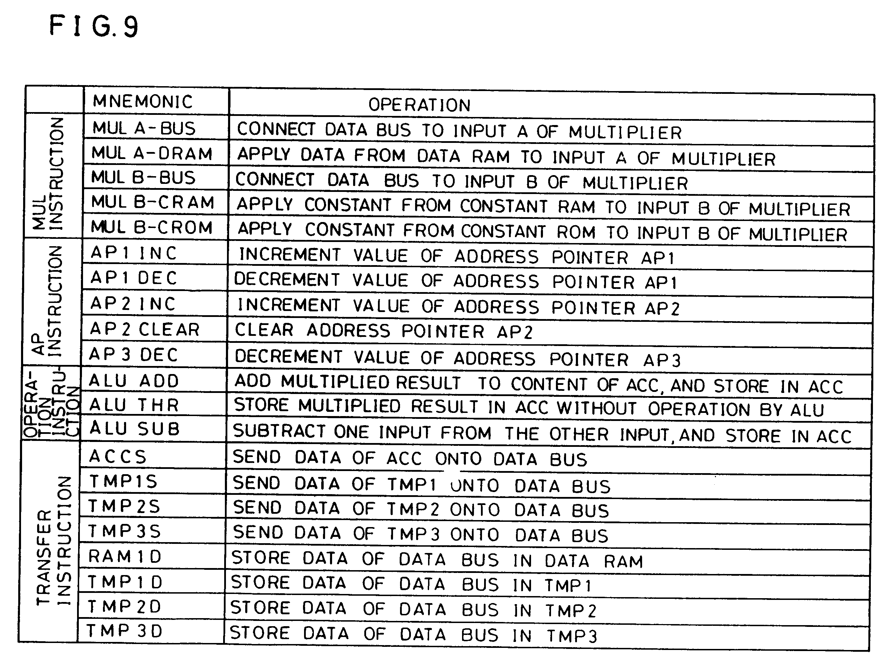

Examples of instructions necessary for constructing the digital filter in the DSP system shown in Fig. 1 are illustrated in Fig. 9. In Fig. 9, MUL instructions are multiplication instructions which select objects to be inputted to the inputs A and B of the multiplier 27 and make the multiplier 27 operate for multiplication thereof. AP instructions make the address pointers 24, 25 and 26 increment, decrement or clear. Operation instructions are control instructions of the ALU 28, wherein ALUADD makes the ALU 28 add two data being inputted and makes the ACC 29 hold an added result thereof, and ALUSUB makes the ALU 28 subtract the one input data from the other input data and makes the ACC 29 hold a subtracted result, and the ALUTHR makes the ACC 29 hold a multiplied result from the multiplier 27 as it is. Transfer instructions RAM1D, TMP1D, TMP2D, TMP3D are storing instructions which make the data RAM 21 and the temporary register 30 store the data from the data buses 11. Transfer instructions ACLS, TMP1S, TMP2S and TMP3S are transfer instructions in accordance with which the data of the ACC 29 and the temporary register 30 are sent onto the data buses 11 and the auxiliary bus 31.

Next, operation for implementing various functions by utilizing the DSP system shown in Fig. 1 will be described.

For example, in the case where the graphic-equalizer is implemented in the audio signal processing, such a graphic-equalizer is obtained by connecting a plurality of stages of band-pass digital filters which are implemented by the product and sum operation being represented as $Y_i = X_i A + X_{i-1} B + X_{i-2} C + Y_{i-1} D + Y_{i-2} E$, where A, B, C, D and E are filter coefficients.

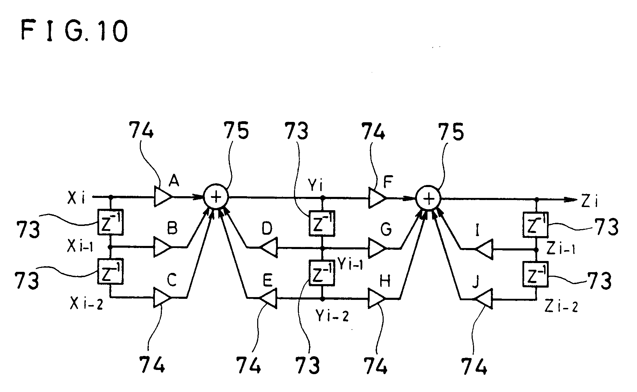

As shown in Fig. 10, a graphic-equalizer of two bands is implemented by series connection of two stages of the band-pass filters each of which is a secondary IIR (Infinite Impulse Response) filter of a direct type. In Fig. 10, $Z^{-1}$ 73 is a delay element having a delay time of unit time (sampling period in this case), and the numeral 74 denotes multiplier elements of constants A - J and the numeral 75 denotes an adder element.

Fig. 11 is an illustrative view showing a program for implementing the digital filter of Fig. 10, and Fig. 12 is an illustrative view showing assignment of the data which is stored in the data RAM 21 and the constant RAM 22. In order to perform multiplication of the coefficients in the order of C, B, A, E, D, H, G, F, J and I, in the program as shown in Fig. 11, the coefficients are stored in the addresses "0" through "9" of the constant RAM 22 in the same order. On the other hand, in the data RAM 21, the data of $X_i$, $Y_i$ and $Z_i$ are written every three addresses. The data of $X_{i+1}$, $Y_{i+1}$ and $Z_{i+1}$ are written shiftedly by one address for each sampling period, that is, filter processing period with respect to one input data $X_{i+1}$, whereby the delay data for the delay elements 73 can be produced. To this end, the program is prepared in advance such that the address pointer 24 cyclically addresses "0" through "7" and the address pointer 25 cyclically addresses "0" through "9".

At the time when the step "0" of the program shown in Fig. 11 is executed with respect to the input data $X_i$, the content of the data RAM 21 is as shown in Fig. 12(A). When the address pointers 24 and 25 both designate the address "0", the step "0" is executed. At this time, the data $X_{i-2}$ which is the input data of two samples before and stored in the address "0" of the data RAM 21 and the coefficient C which is stored in the address "0" of the constant RAM 22 are respectively applied to the inputs A and B of the multiplier 27, and the multiplied result is established and outputted in the next step. In addition, at the last timing of the step "0", the address pointers 24 and 25 are respectively incremented in accordance with the instructions AP1INC and AP2INC such that the contents thereof become "1", respectively.

When the step "1" is executed, likewise the step "0", the outputs of the data RAM 21 and the constant RAM 22 are selected as inputs to the multiplier 27, whereby the data $X_{i-1}$ and the coefficient B which are both stored in the respective address "1" are applied to the multiplier 27. In addition, a result which has been multiplied in the previous step "0" is passed through the ALU 28 in accordance with the instruction ALUTHR without any arithmetic operation, and therefore, the first multiplied result $CX_{i-2}$ is stored in the ACC 29. At the last timing of the step "1", the address pointers 24 and 25 are both incremented in accordance with the instructions AP1INC and AP2INC, whereby the contents thereof become "2", respectively.

Next, when the step "2" is executed, the data buses 11 and the constant RAM 22 are selected as the inputs A and B to the multiplier 27 in accordance with the instructions MULA-BUS and B-CRAM. On the other hand, the content of the temporary register TMP1 is sent onto the data buses 11 in accordance with the instruction TMP1S, and the data being sent onto the data buses 11 is stored in the address "2" of the data RAM 21 which is addressed by the address pointer 24 in accordance with the instruction RAM1D. At this time, in the temporary register TMP1, the input data $X_i$ which is applied from the outside to the data input circuit 14 every sampling period is stored in advance. Therefore, the input data $X_i$ is multiplied in the multiplier 27 into the coefficient A which has been read from the constant RAM 22 and is stored in the address "2" of the data RAM 21. On the other hand, adding of $CX_{i-2}$ being stored in the ACC 29 to the multiplied result $BX_{i-1}$ of the step "1" is performed in accordance with the instruction ALUADD and the added result thereof $BX_{i-1} + CX_{i-2}$ is stored in the ACC 29. At the last timing of the step "2", the address pointers 24 and 25 are both incremented, whereby the contents thereof becomes "3", respectively.

When the step "3" is executed, the data $Y_{i-2}$ and the coefficient E which are respectively stored in the addresses "3" of the data RAM 21 and the constant RAM 22 are applied to the inputs A and B of the multiplier 27, whereby the multiplied result $AX_i$ of the step "2" and the content $BX_{i-1}$ and $CX_{i-2}$ of the ACC 29 are added in the ALU 28 in accordance with the instruction ALUADD, and the added result $AX_i + BX_{i-1} + CX_{i-2}$ is stored in the ACC 29. At the last timing of the step "3", the address pointers 24 and 25 are both incremented, the contents thereof become "4", respectively.

When the step "4" is executed, the data $Y_{i-1}$ and the coefficient D which are respectively stored in the addresses "4" of the data RAM 21 and the constant RAM 22 are applied to the inputs A and B of the multiplier 27, whereby the multiplied result $EY_{i-2}$ of the step "3" and the content $AX_i + BX_{i-1} + CX_{i-2}$ of the ACC 29 are added in the ALU 28 in accordance with the instruction ALUADD, and the added result $AX_i + BX_{i-1} + CX_{i-2} + EY_{i-2}$ is stored in the ACC 29. At the last timing of the step "4", the address pointer 24 is decremented in accordance with the instruction AP1DEC so that the content thereof becomes "3", and the address pointer 25 is incremented in accordance with the instruction AP2INC so that the content thereof becomes "5".

When the step "5" is executed, the data $Y_{i-2}$ which is stored in the address "3" of the data RAM 21 and the coefficient H which is stored in the address "5" of the constant RAM 22 are applied to the inputs A and B of the multiplier 27. This means that multiplication of the second stage of the digital filter as shown in Fig. 10 is performed in the multiplier 27 at this step "5" and thereafter. On the other hand, the multiplied result $DY_{i-1}$ of the step "4" and the content $AX_i + BX_{i-1} + CX_{i-2} + EY_{i-2}$ of the ACC 29 are added in the ALU 28 in accordance with the instruction ALUADD, and the added result $AX_i + BX_{i-1} + CX_{i-2} + DY_{i-1} + EY_{i-2}$ is stored in the ACC 29. The content of the ACC 29 becomes the output $Y_i$ of the digital filter of the first stage. At the last timing of the step "5", the address pointer 24 is incremented so as to become "4" and the address pointer 25 is incremented so as to become "6".

When the step "6" is executed, the data $Y_{i-1}$ which is stored in the address "4" of the data RAM 21 and the coefficient G which is stored in the address "6" of the constant RAM 22 are applied to the inputs A and B of the multiplier 27. In addition, the data $Y_i$ being stored in the ACC 29 is sent onto the data buses 11 in accordance with the instruction ACCS, and the data $Y_i$ being sent onto the data buses 11 is stored in the temporary register TMP2 in accordance with the instruction TMP2D. On the other hand, the multiplied result $HY_{i-2}$ of the step "5" is passed through the ALU 28 in accordance with the instruction ALUTHER without any arithmetic operation and stored in the ACC 29. At the last timing of the step "6", the address pointers 24 and 25 are both incremented so as to respectively become "5" and "7".

When the step "7" is executed, the data which is sent onto the data buses 11 and the coefficient F which is stored in the address "7" of the constant RAM 22 are applied to the inputs A and B of the multiplier 27 in accordance with the instructions MULA-BUS and B-CRAM. In addition, the data $Y_i$ being stored in the temporary register TMP2 is sent onto the data buses 11 and applied to the input A of the multiplier 27 in accordance with the instruction TMP2S, and the data $Y_i$ is further stored in the address "5" of the data RAM 21 which is addressed by the address pointer 24 in accordance with the instruction RAM1D. On the other hand, the multiplied result $GY_{i-1}$ of the step "6" and the content $HY_{i-2}$ of the ACC 29 are added in the ALU 28 in accordance with the instruction ALUADD, and the added result thereof $GY_{i-1} + HY_{i-2}$ is stored in the ACC 29. At the last timing of the step "7", the address pointers 24 and 25 are both incremented so as to respectively become "6" and "8".

When the step "8" is executed, the data $Z_{i-2}$ which is stored in the address "6" of the data RAM 21 and the coefficient J which is stored in the address "8" of the constant RAM 22 are applied to the inputs A and B of the multiplier 27. On the other hand, the multiplied result $JZ_{i-2}$ of the step "7" and the content $GY_{i-1} + HY_{i-2}$ being stored in the ACC 29 are added in the ALU 28 in accordance with the instruction ALUADD, and the added result $FY_i + GY_{i-1} + HY_{i-2} + JZ_{i-2}$ is stored in the ACC 29. At the last timing of the step "8", the address pointers 24 and 25 are incremented so as to respectively become "7" and "9".

When the step "9" is executed, the data $Z_{i-1}$ which is stored in the address "7" of the data RAM 21 and the coefficient I which is stored in the address "9" of the constant RAM 22 are applied to the inputs A and B of the multiplier 27. On the other hand, the multiplied result $JZ_{i-2}$ of the step "8" and the content $FY_i + GY_{i-1} + HY_{i-2}$ being stored in the ACC 29 are added in the ALU 28 in accordance with the instruction ALUADD, and the added result $FY_i + GY_{i-1} + HY_{i-2}$ is stored in the ACC 29. At the last timing of the step "9", the address pointer 24 is incremented so as to become "7" and the address pointer 25 is incremented so as to both become "0".

When the step "10" is executed, no multiplication is performed, and the multiplied result $IZ_{i-1}$ of the step "9" and the content $FY_i + GY_{i-1} + HY_{i-2} + JY_{i-2}$ of the ACC 29 are added in the ALU 28, and the added result $FY_i + GY_{i-1} + HY_{i-2} + IZ_{i-1} + JZ_{i-2}$ is stored in the ACC 29. The content of the ACC 29 at this time becomes the output $Z_i$ of the digital filter of the second stage.

Lastly, when the step "11" is executed, the data $Z_i$ which is stored in the ACC 29 is sent onto the data buses 11 in accordance with the instruction ACCS, and the data $Z_i$ being sent onto the data buses 11 is stored in the address "0" of the data RAM 21 which is addressed by the address pointer 24 in accordance with the instruction RAM1D. At the last timing of the step "11", the address pointer 24 is incremented so as to become "1". Therefore, if the program is executed again from the step "0", the data RAM 21 which is addressed by the address pointer 24 is accessed from the address "1" which is shifted from the starting address of the previous execution by one address.

By executing the program of the above described steps "0" through "11", the input data $X_i$ is digitally filtered, and the content of the data RAM 21 is changed as shown in Fig. 12(B), whereby the filter output $Z_i$ is obtainable. In addition, the starting address is advanced by one address with respect to the process for digitally filtering the next sampling data $X_{i+1}$, whereby the delay data with respect to the data $X_{i+1}$ is obtainable. Therefore, by repeatedly executing the program of the steps "0" through "11" with respect to the sampling data, the content of the data RAM 21 are changed as shown in Fig. 12(C) and (D), whereby the filter outputs $Z_{i+1}$, $Z_{i+2}$, --- are obtainable.

In addition, the above described operation are simultaneously performed in the digital processing circuits 12 and 13 under control of the control circuit 20, therefore, the filter output data of the left channel and the right channel can be simultaneously obtained.

Furthermore, by changing in advance the coefficients which are stored in the constant RAM 22 of the digital processing circuits 12 and 13 prior to execution of the program of Fig. 11, it is possible to make the filter characteristic, that is, the levels of the graphic-equalizer of the left channel and the right channel be independent upon each other. In this case, writing of the coefficients into the constant RAM 22 is performed by transferring the coefficients which are applied from the microcomputer to the interface circuit 15 to the constant RAM 22.

Meanwhile, as described previously, in the IIR filter, $Y_i = C_1X_i + C_2X_{i-1} + C_3X_{i-2} + C_4Y_{i-1} + C_5Y_{i-2}$, where $C_1$, $C_2$, $C_3$, $C_4$ and $C_5$ are coefficients deciding the filter characteristic.

However, in the case of the low frequency band the center frequency of which is approximately 200Hz, it becomes impossible to represent the significant figures or digits of the coefficients $C_1$ - $C_5$, therefore, the respective coefficients are converted in the

form of $\alpha + \beta \delta$. More specifically, $\alpha$ is an integer portion of the constant, and $\beta$ is a quotient of the division of the figures or digits after the decimal point by the numeral $\delta$ being less than "1".

On the assumption that the center frequency is 200Hz, the coefficients $C_1$ - $C_5$ respectively become as follows.

$$C_1 = 1 + a\delta$$
$$C_2 = -2 + b\delta$$
$$C_3 = 1 + c\delta$$
$$C_4 = 2 + d\delta$$
$$C_5 = -1 + e\delta$$

In the above, $\delta$ is $1/2^n$ (where n is an integer).

If these coefficients are substituted for the above described equation, the following equation is obtainable.

$$Y_i = X_i - 2X_{i-1} + X_{i-2} + 2Y_{i-1} - Y_{i-2} + \delta(aX_i + bX_{i-1} + cX_{i-2} + dY_{i-1} + eY_{i-2})$$
$$= X_i - 2(X_{i-1} - Y_{i-1}) + X_{i-2} - Y_{i-2} + \delta(aX_i + bX_{i-1} + cX_{i-2} + dY_{i-1} + eY_{i-2})$$

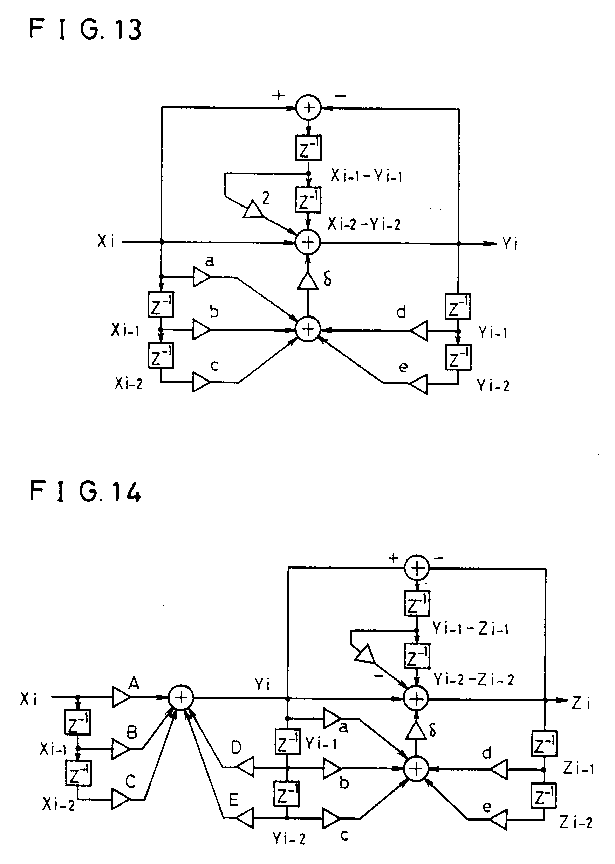

Such product and sum operation can be implemented by the circuit as shown in Fig. 13.

More specifically, first, by executing the respective steps described above, the operated result of $aX_i + bX_{i-1} + cX_{i-2} + dY_{i-1} + eY_{i-2}$ is evaluated, next, $\delta$ is multiplied into the operated result, and the input data $X_i$ and the data $X_{i-2} - Y_{i-2}$ which is the data of two samples before are added to the multiplied result, the multiplied result of the data $X_{i-1} - Y_{i-1}$ which is the data of one sample before into "2" is subtracted from the added result such that the output data $Y_1$ is operated. Therefore, since the product and sum operation is performed by utilizing the coefficients a, b, c, d and e the significant figures or digits of which can be represented by 16 bits, accuracy of the operation of the figures or digits after the decimal point can be increased.

Fig. 14 shows embodiment in which the IIR filter for the low frequency band of the later stage of the IIR filters which are connected in series as shown in Fig. 10 is substituted with the filter as shown in Fig. 13. In addition, with reference to Fig. 15 showing a program for implementing such IIR filter and Fig. 16 showing assignment of the data which is stored in the data RAM 21, constant RAM 22 and temporary register 30, a description will be made on the operation of Fig. 14 embodiment.

Except for the steps "6" and "7", the process from the step "0" to the step "10" is similar to the operation described above. In the steps "6" and "7", the temporary register TMP1 is used instead of the temporary register TMP2 because the temporary register TMP2 is used in the process thereafter; however, operation thereof is not changed. Therefore, at the timing when the step "10" is terminated, in the ACC 29, the operated result of $aY_i + bY_{i-1} + cY_{i-2} + dZ_{i-1} + eZ_{i-2}$ is stored. When the step "11" is executed succeedingly to the step "10", the data being stored in the ACC 29 is right-shifted by n bits. A result of such a shift becomes $\delta(aY_i + bY_{i-1} + cY_{i-2} + dZ_{i-1} + eZ_{i-2})$. This means that since $\delta$ is set as $1/2^n$, multiplication of $1/2^n$ is resultingly performed when the data is right-shifted by n bits.

When the step "12" is executed, the data $Y_{i-2} - Z_{i-2}$ is held in the temporary register TMP3 is sent onto the data buses 11 in accordance with the instruction TMP3S, and the same is added to the data of the ACC 29 in the ALU 28, and the added result $Y_{i-2} - Z_{i-2} + \delta(aY_i + bY_{i-1} + cY_{i-2} + dZ_{i-1} + eZ_{i-2})$ is held in the ACC 29.

When the step "13" is executed, the data $Y_{i-1} - Z_{i-2}$ of the temporary register TMP2 is sent onto the data buses 11 in accordance with the instruction TMP2S, and the same data is written in the temporary register TMP3 in accordance with the instruction TMP3D to obtain the delay data for processing the next sampling data. On the other hand, the data $Y_{i-1} - Z_{i-1}$ being sent onto the data buses 11 is subtracted from the data being held in the ACC 29 in the ALU 28 in accordance with the instruction ALUSUB, and the subtracted result is held again in the ACC 29.

When the step "14" is executed, likewise the step "13", the data $Y_{i-1} - Z_{i-1}$ is sent onto the data buses 11 and the same is subtracted from the data being held in the ACC 29, and the subtracted result is written into the ACC 29. The content of the ACC 29 at this time is $-2(Y_{i-1} - Z_{i-1}) + (Y_{i-2} - Z_{i-2}) + \delta(aY_i + bY_{i-1} + cY_{i-2} + dZ_{i-1} + eZ_{i-2})$.

When the step "15" is executed, the data $X_i$ of the temporary register TMP1 is sent onto the data buses 11 in accordance with the instruction TMP1S, and the same is added to the data of ACC 29 in the ALU 28, and the added result thereof is written in the ACC 29. The content of the ACC 29 at this time becomes $Y_{i-2}(Y_{i-1} - Z_{i-1}) + (Y_{i-2} - Z_{i-2}) + \delta(aY_i + bY_{i-1} + cY_{i-2} + dZ_{i-1} + eZ_{i-2})$, that is, the outputted data $Z_i$ of the digital filter.

When the step "16" is executed, the data $Z_i$ which is stored in the ACC 29 is sent onto the data buses 11 in accordance with the instruction ACCS, and the same data is stored in accordance with the instruction RAM1D in the address "0" of the data RAM 21 which is addressed by the address pointer 24.

When the step "17" is executed, the data $Y_i$ of the temporary register TMP1 is sent onto the data buses 11 in accordance with the instruction TMP1S, and the data $Z_i$ which is stored in the ACC 29 is subtracted from the data $Y_i$ in the ALU 28 in accordance with the instruction ALUSUB, the subtracted result $Y_i - Z_i$ is stored in the ACC 29.

When the step "18" is executed, the data $Y_i - Z_i$ which is stored in the ACC 29 is sent onto the data buses 11 in accordance with the instruction ACCS, the data $Y_i - Z_i$ of the data buses 11 is stored in the temporary register TMP2 in accordance with the instruction TMP2D, becoming the delay data for processing the succeeding sampling data. In the last timing of the step "18", the address pointer 24 is incremented in accordance with the instruction AP1INC so as to become "1". Therefore, when the process for the succeeding sampling data $X_{i+1}$ is started, the data RAM 21 which is addressed by the address pointer 24 is accessed from the address "1" which is advanced from the starting address of the previous operation or execution by one address.

By executing the program of the above described steps "0" through "18" for each sampling period, the input data $X_i$, $X_{i+1}$, $X_{i+2}$, --- are digitally filtered. Therefore, the content of the data RAM 21 is changed as shown in Fig. 16(A), (B), (C), and (D), and the filter output $Z_i$, $Z_{i+1}$, $Z_{i+2}$, --- are obtainable.

Thus, in implementing the digital filter for the low frequency band by utilizing the DSP system, since accuracy of multiplication can be increased without increasing of the number of bits of the data to be multiplied, it is possible to obtain a good filter characteristic in the low frequency band. Furthermore, since the process for digital filters for different frequency bands can be continuously executed, it is possible to reduce or shorten the number of the program steps for implementing the graphic-equalizer.

Next, a description will be made on the operation for cyclically accessing cyclic storage areas of the external storage. As shown in Fig. 5, the cyclic storage areas can be accessed as an independent storage by the address data of "0" through "n", and the previous address data "X" is held in a predetermined address of the constant RAM 22. Then, a description will be made on the case where the cyclic storage areas is accessed one by one address in a direction from the address "n" to the address "0".

The address in which the address data "X" has been stored is set in the address pointer 25 so as to execute MD instruction. The MD instruction makes the constant RAM 22 read the address data "X", the address data "X" thus read is decremented in the ALU 28 in response to a control signal MD, a result thereof "X-1" is held in the ACC 29. If the borrow occurs in processing "X-1", termination address "n" of the cyclic storage areas being stored in a predetermined address of the constant ROM 23 is read, and the same "n" is held in the ACC 29 instead of "X-1". These operations is completed within the execution cycle of MD instruction. Next, the data of ACC 29 is transferred and held into the address of the constant RAM 22 in which the address data "X" was stored. Furthermore, the adding instruction ADD is executed so that the starting address "A" of the cyclic storage areas being stored in the constant ROM 23 is read and added to the data being held in the ACC 29, and the added result "X-1+A" is held again in the ACC 29. Thus, the address data which is held in the ACC 29 functions as the actual address data for the external storage. In order to apply the actual address data to the external storage, the transfer instruction is executed such that the address data within the ACC 29 is transferred to any one of the address holding registers RMAD (Fig. 4) of the external storage interface circuit 16. Thus, the address data "X-1+A" is applied to the external storage through the output register 48.

In the case where D-RAM (dynamic random access memory) is used as the external storage, by cyclically accessing the cyclic storage areas, refreshing of the D-RAM is performed. More specifically, when the actual address data "X-1+A" is 16 bits, "X" for addressing the cyclic storage areas is "0" through "n", therefore, bit or bits which are changed by such cyclic accessing are a part of the address data of 16 bits. Therefore, the output register 48 as shown in Fig. 4 is constructed such that the bits being changed are outputted as a low address data for the D-RAM. In addition, the address data is 16 bits but the address holding registers 46, 48 and output register 48 are respectively constructed as 17 bits. The reason is that in the case where the bits being changed does not reach the number of bits of the low address data for the D-RAM, the remaining one bit is outputted as one bit of the low address data, and this one bit is modified so as to refresh all of the areas of the D-RAM.

By outputting the actual address data "X-1+A", the data being read is sent onto the data buses 11 through the input register 49 and the input data holding register (RMRD) 50 or 51, and the data to be written is written into the external storage through the output data holding register (RMWR) 52 and 53 and the output register 54.

Thus, since decrement and transfer operation are based upon a result of such decrement within the execution cycle of the MD instruction, the number of program steps for producing the address data can be reduced.

By using the above described function, it is possible to produce reverberations. More specifically, for each sampling period, the writing address is decremented such that the digital data of the audio signal being sampled are sequentially written into the cyclic storage areas, and the reading address which is offset with respect to the writing address is set correspondingly to the primary echo, secondary echo, tertiary echo, --- such that the digital data are read from the cyclic storage areas based upon the reading address to process the same. Of course, since the reading address is also decremented for each sampling period, by means of the above described function, the cyclic storage area can be cyclically accessed.

Next, a description will be made on a function for adjusting the level of the input data. The digital data which is inputted for each sampling period is digitally filtered by the aforementioned digital filter. When the level of the input data is too large or too small, the overflow occurs in making multiplication or arithmetic operation. If the output of the digital filter in the state where such overflow has occurred is converted into the analog signal of the audio signal, the overflow is reproduced as a noise.

Therefore, in the DSP system as shown in Fig. 1, the overflow is detected such that the output of the digital filter can be controlled and the level of the input data can be adjusted. Example of such operation is shown in Fig. 17 and described later.

The digital data which is inputted for each sampling period is not filtered as it is, and the coefficient K is multiplied into the digital data, and the multiplied result is used as the input digital data $X_i$ to be filtered. In Fig. 17, first, the digital data is inputted from the data input/output circuit 14 and temporarily held in a predetermined address of the data RAM 21. Then, multiplication of the unprocessed digital data being read from the data RAM 21 into the coefficient K being held in the temporary register TMP3 is performed in accordance with the multiplication instruction MUL. The temporary register TMP3 is utilized for holding the coefficient K, in the initial state, the constant "1" being stored in the constant ROM 23 has been transferred thereto in advance. After multiplication, the instruction for resetting the overflow flags (R, L) 59 within the conditional jump control circuit 19 is executed to reset the overflow flags 59, and the digital data $X_i$ into which the coefficient K has been multiplied is transferred to the temporary register TMP1. As described previously, the temporary register TMP1 is utilized for holding the input digital data $X_i$ in making the filtering process, and the input digital data $X_i$ is filtered.

After termination of the filtering process, it is determined whether or not the overflow occurs by multiplication or arithmetic operation during the filtering process in accordance with the determination instruction for overflow flags. At that time, each bit of the condition setting register 55 (Fig. 7) of the conditional jump control circuit 19, "1" is set such that it is possible to determine the overflow in the both of the left channel and the right channel. As a result of such determination, if the overflow does not occur, the filtering process is continued; however, if the overflow occurs, with reference to the output data during the filtering process, it is determined that the overflow is the positive overflow or the negative overflow.

In the case of the positive overflow, the maximum value "7FFFFFFF" is fetched out from the predetermined address of the constant ROM 23 and set in the data RAM 21 as the filter output $Z_i$, and in the case of the negative overflow, the minimum value "80000000" being stored in the constant ROM 23 is fetched and stored in the data RAM 21 as the filter output $Z_i$.

Then, when the process for digital filter is completed, the output data $Z_i$ being stored in the data RAM 21 is transferred to the data input/output circuit 14 as the processed digital data and outputted. At this time, before starting the process for next input digital data, it is determined again whether or not the overflow occurs. Since the overflow flags (R, L) 59 as shown in Fig. 7 are not reset in executing the determination instruction for the overflow, if the overflow has occurred in the preceding process for digital filter, the same remain in the set state.

As a result of such determination, if the overflow occurs, based upon the preceding determination, it is determined that the overflow is the positive overflow or the negative overflow. In the case of the positive overflow, since the level of the digital data being inputted is too large, the address of the constant ROM 23 in which the constant "a" (a=0.99) is stored is set in the address pointer 26 so as to make the coefficient K small, and in the case of the negative overflow, the address of the constant ROM 23 in which the constant "b" (b=1.01) is stored is set in the address pointer 26 so as to make the coefficient K large.

On the other hand, in the case where no overflow occurs, it is determined whether or not the coefficient K being held in the temporary register TMP3 is "1". If the coefficient K is "1", since it is not necessary to change or modify the coefficient K, the address of the constant ROM 23 to which the constant "1" is stored is set in the address pointer 26, and if the coefficient K is not "1", it is determined whether or not the coefficient K is larger than "1" or smaller than "1" (K>1 or K<1). If the coefficient K>1, the constant "a" is selected so as to make the coefficient K close to "1", and the constant "b" is selected when the coefficient K<1. Then, the constant which is addressed by the address pointer 26 is read from the constant ROM 23 in accordance with the multiplication instruction to multiply into the coefficient K being held in the temporary register TMP3, and the multiplied result is transferred to the temporary register TMP3 as a new coefficient K. Thereafter, the next digital data is multiplied into the new coefficient K. In addition, the overflow flags (R, L) 59 have been set are reset in accordance with the reset instruction after multiplication.

Thus, in the case where the overflow occurs in making multiplication or arithmetic operation, since the coefficient K is gradually increased or decreased for each sampling period, the level of the inputted digital data is smoothly changed. In addition, in the case where no overflow has occurred, the coefficient K is gradually changed so as to become "1", and therefore, when the digital data being outputted is converted and reproduced as the analog signal, there is no drastic change in the sound.

Next, a description will be made on an operation for modifying or writing the filter coefficients which are stored in the constant RAM 22 for constructing the digital filter. In the case where the coefficients of the data filter are changed, such coefficients are sent from the microcomputer being connected the outside. The digital filter has configuration as shown in Fig. 10, 13 and Fig. 14. However, modification of the coefficients must be performed for respective stages at once. For example, if the coefficients are modified during operation of the first stage filter, the filter output $Y_i$ of the first stage cannot be correctly filtered and thus distorted. Then, in the following, the case where the five coefficients A, B, C, D, and E of the first stage are modified is described. In the constant RAM 22, as shown in Fig. 12, the filter coefficients C, B, A, E, and D are stored in the addresses "0" through "4" in the this order. The holding register 42 of the interface circuit 15 as shown in Fig. 3 is read in the reverse order with respect to the writing order, and therefore, the microcomputer transfers the filter coefficients D, E, A, B, and C in this order, and the microcomputer sends the composite data as shown in Fig. 6 after the coefficient C. In this case, the least significant 10 bits of the composite data is the address of the constant RAM 22 in which the coefficient C is stored, that is, "0", and the most significant 4 bits is the data representative of the number of the coefficients, that is, "5". In the case where the coefficients A, B, C, D, and E are changed or modified in the both of the right channel and the left channel, the remaining 2 bits of the composite data are both "1", and in the case where such coefficients are to be changed or modified independently, only the bit corresponding to the channel to be modified is made as "1". When the coefficients D, E, A, B, and C and the composite data are completely transferred by the microcomputer, in order to set the transfer termination flag 43, the DSP system detects termination of the transfer in accordance with the determination instruction for the transfer termination flag 43.

First, the transfer instruction from the interface circuit 15 to the loop counter 40, the storage control register 18 and the address pointer 25 is executed, whereby, "5" is set in the loop counter 40 and "0" is set in the address pointer 25, and "1", for example, is set in the storage control register 18. Next, the transfer instruction from the interface circuit 15 to the constant RAM 22 is repeatedly executed by the number of times which is set in the loop counter 40, that is, five times, whereby the constants are fetched from the holding register 42 and transferred to the constant RAM 22 in the order of C, B, A, E, and D. Since the address pointer 25 is incremented for each time of execution of the transfer instruction, as shown in Fig. 12, the coefficients C, B, A, E, and D are stored in the respective addresses.

Therefore, the program for transferring the data from the interface circuit 15 is implemented by only two transfer instructions, it is possible to reduce the number of the program steps.

As described above, in accordance with the present invention, it is possible to implement the DSP system having larger functions and high throughput. Such DSP system can be easily integrated in a single chip of the semiconductor device, and therefore, it becomes easy to connect with the external device. Especially, such DSP system is utilized for processing the audio signal, many advantages can be performed to increase functions of the audio equipments.

## Claims

1. A digital signal processing apparatus **characterized in** that said apparatus comprises:

    a pair of digital processing means (12) (13) having the same structure, respectively;

    a pair of data buses (11) for transferring digital data and for coupling said pair of digital signal processing means to each other; and

    control means (20) coupled to at least one of said pair of data buses for simultaneously controlling operations of said pair of digital processing means in accordance with the procedure being programmed in advance,

    wherein each of said pair of digital processing means includes

    a first RAM (21) which stores a plurality of inputted digital data and a plurality of data of operated result,

    a second RAM (22) which stores a plurality of constants for implementing a digital filter,

    a first address pointer (24) which designates an address of said first RAM,

    a second address pointer (25) which designates an address of said second RAM,

    a multiplier (27) which multiplies the data being read from said first RAM by the data being read from said second RAM, and

    an ALU (28) which operates a multiplied result from said multiplier with the operated result being stored in an accumulator (29) and makes the accumulator hold the operated result thereof.

2. An apparatus in accordance with claim 1, **characterized** in that audio digital signals are processed by said apparatus, wherein each of said pair of digital processing means includes:

    storing means (21) for storing address data to cyclically access specific storage areas of an external storage being connected to the outside,

    operation means (28) for executing operation in which said address data is incremented or decremented and a predetermined value is outputted as an operated result when an incremented or decremented result is a boundary of said specific storage areas in accordance with a single instruction,

    adding means (28) for adding the operated result from said operation means to a starting address data of said specific storage areas so as to obtain actual address data for said external storage,

    and that said apparatus further comprises external storage interface means (16) which inputs the actual address data obtained by said adding means through said data buses to said external storage.

3. An apparatus in accordance with claim 2, wherein said external storage includes D-RAM (Dynamic Random Access Memory), and said external storage interface means includes means (46, 47, 48) for outputting said actual address data such that at least an area other than said specific storage areas can be refreshed while said specific storage areas is cyclically accessed by said actual address data at one time.

4. An apparatus in accordance with claim 1, 2 or 3, **characterized** in that said apparatus processes audio digital signals and adjusts an input level, wherein

    each of said pair of digital processing means includes storing means (23) for storing a constant "1", a constant "a" being smaller than "1", and a constant "b" being larger than "1",

    and that said apparatus further comprises overflow flag means (59) connected to each of said ALU, which holds that overflow occuring as a result of said multiplication and arithmetic operation; and

    selecting means (26) which selects any one of said constants "1", "a", and "b" based upon a content of said overflow flag means to multiply the selected constant into a coefficient which is multiplied into an inputted digital data.

5. An apparatus in accordance with any preceding claim, **characterized** in that said apparatus processes audio digital signals, and said apparatus further comprises interface means (15) including:

    register means (41) into which is inputted the digital data being applied from the outside in accordance with a control signal being applied from the outside,

    holding means (42) which sequentially holds a plurality of the digital data being inputted in said register means and sends said plurality of digital data onto said pair of data buses in accordance with a signal representative of termination of transfer of the data being applied from the outside, and

    output register means (44) which holds processed data being sent onto said pair of data buses and outputs the processed data to the outside.

6. An apparatus in accordance with claim 5,
**characterized** in
that said control means (20) includes a loop counter means (40) for controlling the number of execution times of instruction for sending the digital data from said holding means of said interface means (15) onto said pair of data buses (11), and that said apparatus further comprises
storage control register means (18) which is connected to one or both of said pair of data buses and controls storing operation of said respective first and second RAM (21, 22), and
the digital data being initially sent from said holding means (42) of said interface means (15) are held in said first and/or second address pointer (24, 25), loop counter means and storage control register means.

7. An apparatus in accordance with any preceding claim,
**characterized** in
that said apparatus further comprises digital data exchanging means (17) which is provided between said pair of data buses, said digital data exchanging means including:
first register means (17a) which holds the digital data being sent onto one of said data buses and outputs the same onto the other of said data buses, and
second register means (17b) which holds the digital data being sent onto the other of said data buses and outputs the same onto said one of said data buses, wherein
said first and second register means are simultaneously operated.

8. An apparatus in accordance with any preceding claim,
wherein said control means includes:
program memory means (32) which stores a program consisting of combination of instruction codes,
program counter means (33) which designates an address of said program memory means,
decoder means (34) which decodes the instruction codes being fetched from said program memory means and outputs control signals,
jump address register means (37, 38) which is connected to one or both said pair of data buses and in which an address data of a jump address is set, and
multiplexer (39)
means which selectively applies the address being set in said jump address register means to said program counter means,
whereby the address data of the jump address is settable from the outside.

9. An apparatus in accordance with claim 8,
wherein said control means includes means (34, JMP) for enabling said jump address register means when a jump instruction is to be executed or when a conditional jump instruction is to be executed.

10. An apparatus in accordance with any preceding claim,
further comprising conditional jump control means (19) which includes:
a plurality of pair of flag means (56-59) which are set when results of said multiplier and/or ALU reach a predetermined condition,
condition setting register means (55) connected to one or both said pair of data buses, and
selecting means (60) for selecting outputs of said plurality of pair of flag means in accordance with the content of said condition setting register means to output a jump control signal to said control means.

11. An apparatus in accordance with any preceding claim,
**characterized** in
that said apparatus is formed to a digital filter for audio digital signals, wherein each of said first and second address pointers in each of said pair of digital processing means includes a function for cyclically addressing corresponding one of said first and second RAMs between a predetermined address and a variable set address.

12. A method for implementing a low-frequency band-pass digital filter of IIR (Infinite Impulse Response) type by using the apparatus of claim 11,
**characterized** in
that in advance each of the coefficients of said digital filter is converted into the form of $\alpha + \beta \cdot \delta$, wherein $\alpha$ is an integer nearest said coefficient of said digital filter, $\delta$ is a common coefficient ($\delta \ll 1$), and $\beta$ is a quotient of division of difference between said coefficient of said digital filter and said $\alpha$ by the common coefficient $\delta$, and said $\alpha$, $\beta$, and $\delta$ are stored in said second RAM; that product and sum operation of the respective coefficient $\beta$ with respect to said data is made; that a result of said product and sum operation is multiplied into said common coefficient $\delta$; that product and sum operation of the respective coefficient $\alpha$ with respect to said data is made; and that adding or subtracting of the multiplied result and operated result of said product and sum operation of the coefficient $\alpha$ with respect to said data is performed to obtain an output of the digital filter.

**Patentansprüche**

1. Eine Digitalsignal-Verarbeitungsvorrichtung, dadurch **gekennzeichnet** daß die Vorrichtung aufweist:

ein Paar Digitalverarbeitungseinrichtungen (12 bzw. 13) mit jeweils gleichem Aufbau;

ein Paar Datenbusse (11) zum Übertragen von digitalen Daten und zum Koppeln der beiden Digitalsignal-Verarbeitungseinrichtungen miteinander; und

eine Steuereinrichtung (20), die für gleichzeitige Steuervorgänge der beiden Digitalverarbeitungseinrichtungen gemäß dem im voraus programmierten Ablauf mit mindestens einem der beiden Datenbusse gekoppelt ist,

wobei jede der beiden Digitalverarbeitungseinrichtungen umfaßt:

ein erstes RAM (21), das eine Vielzahl von eingegebenen digitalen Daten und eine Vielzahl von Daten bearbeiteter Ergebnisse speichert,

ein zweites RAM (22), das eine Vielzahl von Konstanten zum Implementieren eines Digitalfilters speichert,

einen ersten Adreßzeiger (24), der eine Adresse des ersten RAM bestimmt,

einen zweiten Adreßzeiger (25), der eine Adresse des zweiten RAM bestimmt,

einen Multiplizierer (27), der die vom ersten RAM gelesenen Daten mit den vom zweiten RAM gelesenen Daten multipliziert, und

eine ALU (28), die ein mulitpliziertes Ergebnis von dem Multiplizierer mit dem in einem Akkumulator (29) gespeicherten, bearbeiteten Ergebnis bearbeitet und bewirkt, daß der Akkumulator das daraus berechnete Ergebnis hält.

2. Eine Vorrichtung nach Anspruch 1, dadurch **gekennzeichnet** daß digitale Audiosignale durch die Vorrichtung verarbeitet werden, wobei jede der beiden Digitalverarbeitungseinrichtungen umfaßt:

eine Speichereinrichtung (21) zum Speichern von Adreßdaten in zyklisch zugreifbaren, spezifischen Speicherbereichen eines externen Speichers, der mit der Außenseite verbunden ist,

eine Operationseinrichtung (28) zum Ausführen einer Operation, bei der die Adressendaten inkrementiert oder dekrementiert und ein vorbestimmter Wert als ein bearbeitetes Ergebnis ausgegeben werden, falls ein inkrementiertes oder dekrementiertes Ergebnis gemäß einem einzelnen Befehl eine Grenze der spezifischen Speicherbereiche darstellt, und

eine Addiereinrichtung (28) zum Addieren des bearbeiteten Ergebnisses von der Operationseinrichtung zu einem Startadressen-Datenwert der spezifischen Speicherbereiche, um tatsächliche Adreßdaten für den externen Speicher zu erhalten,

und daß die Vorrichtung ferner eine externe Speicherschnittstelleneinrichtung (16) aufweist, die die über die Datenbusse von der Addiereinrichtung erhaltenen tatsächlichen Adreßdaten dem externen Speicher eingibt.

3. Eine Vorrichtung nach Anspruch 2, wobei der externe Speicher ein DRAM (einen dynamischen Direktzugriffsspeicher) umfaßt und die externe Speicherschnittstelleneinrichtung eine Einrichtung (46, 47, 48) zum Ausgeben der tatsächliche Adreßdaten umfaßt, so daß zumindest ein anderer Bereich als die spezifischen Speicherbereiche aufgefrischt werden kann, während zugleich mittels der tatsächlichen Adreßdaten auf die spezifischen Speicherbereiche zyklisch zugegriffen wird.

4. Eine Vorrichtung nach Anspruch 1, 2 oder 3, dadurch **gekennzeichnet**, daß die Vorrichtung digitale Audiosignale verarbeitet und einen Eingangspegel einstellt, wobei

jede der beiden Digitalverarbeitungseinrichtungen eine Speichereinrichtung (23) zum Speichern einer Konstante "1", einer Konstante "a", die kleiner als "1" ist, und einer Konstante "b" umfaßt, die größer als "1" ist,

und daß die Vorrichtung ferner aufweist eine Überlauf-Merkereinrichtung (59), die mit jeder der ALU verbunden ist und die diesen als ein Ergebnis der Multiplikation und der arithmetischen Operation auftretenden Überlauf hält; und

eine Auswähleinrichtung (26), die irgendeine der Konstanten "1", "a" und "b" aufgrund eines Inhaltes der Überlauf-Merkereinrichtung auswählt, so daß die ausgewählte Konstante mit einem Koeffizienten multipliziert wird, der mit eingegebenen digitalen Daten multipliziert wird.

5. Eine Vorrichtung nach irgendeinem vorhergehenden Anspruch, dadurch **gekennzeichnet**, daß die Vorrichtung digitale Audiosignale verarbeitet und daß die Vorrichtung ferner eine Schnittstelleneinrichtung (15) aufweist, die

eine Registereinrichtung (41), in die die digitalen Daten eingegeben werden, die von außen gemäß einem von außen angelegten Steuersignal angelegt werden,

eine Halteeinrichtung (42), die sequentiell eine Vielzahl der in die Registereinrichtung eingegebenen digitalen Daten hält und die Vielzahl der digitalen Daten auf die beiden Datenbusse gemäß einem Signal sendet, das für die Beendigung der Übertragung der von außen angelegten Daten representativ ist, und

eine Ausgangsregistereinrichtung (44) umfaßt, die auf den beiden Datenbussen gesendete, verarbeitete Daten hält und die verarbeiteten Daten nach außen ausgibt.

6. Eine Vorrichtung nach Anspruch 5,
dadurch **gekennzeichnet,**
daß die Steuereinrichtung (20) eine Schleifenzählereinrichtung (40) zum Steuern der Anzahl der Ausführungszeiten der Anweisung zum Senden der digitalen Daten von der Halteeinrichtung der Schnittstelleneinrichtung (15) auf die beiden Datenbusse (11) umfaßt und daß die Vorrichtung ferner aufweist:

eine Speicher-Steuerregistereinrichtung (18), die mit einem oder mit beiden der beiden Datenbusse verbunden ist und den Speicherbetrieb des jeweils ersten und zweiten RAM (21, 22) steuert,

wobei die digitalen Daten, die anfänglich von der Halteeinrichtung (42) der Schnittstelleneinrichtung (15) gesendet wurden, in dem ersten und/oder zweiten Adreßzeiger (24, 25), der Schleifenzählereinrichtung und der Speicher-Steuerregistereinrichtung gehalten werden.

7. Eine Vorrichtung nach irgendeinem vorhergehenden Anspruch,
dadurch **gekennzeichnet,**
daß die Vorrichtung ferner eine Digitaldaten-Austauscheinrichtung (17) aufweist, die zwischen den beiden Datenbussen vorgesehen ist, wobei die Digitaldaten-Austauscheinrichtung umfaßt:

eine erste Registereinrichtung (17a), die die auf einem der Datenbusse gesendeten digitalen Daten hält und dieselben auf den anderen der Datenbusse ausgibt, und

eine zweite Registereinrichtung (17b), die die auf den anderen der Datenbusse gesendeten digitalen Daten hält und dieselben auf den einen der Datenbusse ausgibt,

wobei die erste und die zweite Registereinrichtung gleichzeitig betrieben werden.

8. Eine Vorrichtung nach irgendeinem vorhergehenden Anspruch,
wobei die Steuereinrichtung umfaßt:
eine Programmspeichereinrichtung (32), die ein aus einer Kombination von Befehlscodes bestehendes Programm speichert,

eine Programmzählereinrichtung (33), die eine Adresse der Programmspeichereinrichtung bestimmt,

eine Dekodierereinrichtung (34), die die von der Programmspeichereinrichtung abgerufenen Befehlscodes dekodiert und Steuersignale ausgibt,

eine Sprungadressen-Registereinrichtung (37, 38), die mit einem oder beiden der beiden Datenbusse verbunden ist und in die Adreßdaten einer Sprungadresse eingesetzt werden, und

eine Multiplexereinrichtung (39), die die in der Sprungadressen-Registereinrichtung eingesetzte Adresse an die Programmsteuereinrichtung wahlweise anlegt,

wobei die Adreßdaten der Sprungadresse von außen einsetzbar sind.

9. Eine Vorrichtung nach Anspruch 8,
wobei die Steuereinrichtung eine Einrichtung (34, JMP) zum Freigeben der Sprungadressen-Registereinrichtung, falls ein Sprungbefehl auszuführen ist oder falls ein bedingter Sprungbefehl auszuführen ist, umfaßt.

10. Eine Vorrichtung nach irgendeinem vorhergehenden Anspruch,
die ferner eine Steuereinrichtung (19) für einen bedingten Sprung aufweist, wobei diese umfaßt:

eine Vielzahl von Merkereinrichtungspaaren (56 - 59), die gesetzt werden, falls Ergebnisse des Multiplizierers und/oder der ALU eine vorbestimmte Bedingung erfüllen,

eine Bedingungseinstell-Registereinrichtung (55), die mit einem oder beiden der beiden Datenbusse verbunden ist, und

eine Auswähleinrichtung (60) zum Auswählen der Ausgangswerte der Vielzahl der Merkereinrichtungspaare gemäß dem Inhalt der Bedingungseinstell-Registereinrichtung, so daß ein Sprungsteuersignal zur Steuereinrichtung ausgegeben wird.

11. Eine Vorrichtung nach irgendeinem vorhergehenden Anspruch
dadurch **gekennzeichnet,**
daß die Vorrichtung als ein digitales Filter für digitale Audiosignale ausgebildet ist, wobei jeder der ersten und zweiten Adressenzeiger in jeder der beiden Digitalverarbeitungseinrichtungen eine Funktion zum zyklischen Adressieren des entsprechenden der ersten und zweiten RAM zwischen einer vorbestimmten Adresse und einer variabel gesetzten Adresse umfaßt.

12. Ein Verfahren zum Implementieren eines Niederfrequenz-Bandpaß-Digitalfilters vom IIR-(Infinite Impulse Response-) Typ durch Verwenden der Vorrichtung nach Anspruch 11,
dadurch **gekennzeichnet,**
daß im voraus jeder der Koeffizienten des Digi-

talfilters in die Form $\alpha + \beta \cdot \delta$ umgewandelt wird, wobei $\alpha$ eine dem Koeffizienten des Digitalfilters am nächsten gelegene ganze Zahl ist, $\delta$ ein gemeinsamer Koeffizient ($\delta \ll 1$) ist und $\beta$ ein Quotient der Division von der Differenz zwischen dem Koeffizienten des Digitalfilters und dem $\alpha$ durch den gemeinsamen Koeffizienten $\delta$ ist und wobei ein $\alpha$, $\beta$ und $\delta$ in dem zweiten RAM gespeichert werden; daß eine Produkt- und Summenoperation des jeweiligen Koeffizienten $\beta$ bezüglich der Daten durchgeführt wird; daß ein Ergebnis der Produkt- und Summenoperation mit dem gemeinsamen Koeffizienten $\delta$ multipliziert wird; daß eine Produkt- und Summenoperation des jeweiligen Koeffizienten $\alpha$ bezüglich der Daten durchgeführt wird; und daß eine Addition oder Subtraktion des multiplizierten Ergebnisses und berechneten Ergebnisses der Produkt- und Summenoperation des Koeffizienten $\alpha$ bezüglich der Daten durchgeführt wird, so daß eine Ausgabe des Digitalfilters erhalten wird.

## Revendications

1. Dispositif de traitement de signaux numériques caractérisé en ce que ledit dispositif comprend :

une paire de moyens de traitement numérique (12) (13) ayant la même structure, respectivement,

une paire de bus de données (11) pour transférer les données numériques et pour coupler ladite paire de moyens de traitement de signaux numériques l'un à l'autre, et

un moyen de commande (20) couplé à au moins un bus de ladite paire de bus de données pour commander simultanément les opérations de ladite paire de moyens de traitement numérique en conformité avec la procédure qui est programmée à l'avance,

dans lequel chaque moyen de traitement numérique de ladite paire de moyens de traitement numérique comporte,

une première mémoire vive (21) qui mémorise une pluralité de données numériques entrées et une pluralité de données de résultat d'opération,

une seconde mémoire vive (22) qui mémorise une pluralité de constantes pour mettre en oeuvre un filtre numérique,

un premier pointeur d'adresse (24) qui désigne une adresse de ladite première mémoire vive,

un second pointeur d'adresse (25) qui désigne une adresse de ladite seconde mémoire vive,

un multiplicateur (27) qui multiplie les données qui sont extraites de ladite première mémoire vive par les données qui sont extraites de ladite seconde mémoire vive, et

une unité arithmétique et logique (28) qui effectue une opération sur le résultat de la multiplication provenant dudit multiplicateur, le résultat de l'opération étant mémorisé dans un accumulateur (29) et amène l'accumulateur à conserver le résultat de l'opération.

2. Dispositif selon la revendication 1, caractérisé en ce que des signaux numériques audiofréquence sont traités par ledit dispositif, dans lequel chaque moyen de traitement numérique de ladite paire de moyens de traitement numérique comporte :

un moyen de mémorisation (21) pour mémoriser les données d'adresses pour accéder de façon cyclique à des zones de mémorisation spécifiques d'une mémoire externe qui est connectée à l'extérieur,

un moyen d'opération (28) pour exécuter l'opération dans laquelle lesdites données d'adresse sont incrémentées ou décrémentées et une valeur prédéterminée est sortie comme résultat de l'opération lorsque le résultat de l'incrémentation ou de la décrémentation est une limite desdites zones de mémorisation spécifiques en conformité avec une seule instruction,

un moyen d'addition (28) pour additionner le résultat de l'opération provenant dudit moyen d'opération à une donnée d'adresse de début desdites zones de mémorisation spécifiques de façon à obtenir la donnée d'adresse réelle pour ladite mémoire externe,

et en ce que ledit dispositif comprend de plus un moyen d'interface de mémoire externe (16) qui entre la donnée d'adresse réelle, obtenue par ledit moyen d'addition, par l'intermédiaire dudit bus de données dans ladite mémoire externe.

3. Dispositif selon la revendication 2, dans lequel ladite mémoire externe comporte une mémoire DRAM (mémoire vive dynamique) et ledit moyen d'interface de mémoire externe comporte un moyen (46, 47, 48) pour sortir lesdites données d'adresse réelle de sorte qu'au moins une zone autre que lesdites zones de mémorisation spécifiques puisse être rafraîchie lorsqu'on accède de façon cyclique aux zones de mémorisation spécifiques par lesdites données d'adresse réelle en une fois.

4. Dispositif selon la revendication 1, 2 ou 3,

caractérisé en ce que ledit dispositif traite des signaux numériques audiofréquence et ajuste un niveau d'entrée, dans lequel

chaque moyen de traitement numérique de ladite paire de moyens de traitement numérique comporte un moyen de mémorisation (23) pour mémoriser une constante "1", une constante "a" qui est inférieure à "1" et une constante "b" qui est supérieure à "1",

et ledit dispositif comprend de plus

un moyen d'indicateurs de débordements (59) relié à chaque unité arithmétique et logique de ladite unité arithmétique et logique, lequel conserve l'indication du débordement qui s'est produit comme résultat de ladite opération de multiplication et de l'opération arithmétique, et

un moyen de sélection (26) qui sélectionne l'une quelconque desdites constantes "1", "a", et "b" sur la base du contenu dudit moyen d'indicateur de débordement afin de multiplier la constante sélectionnée par un coefficient qui est multiplié par une donnée numérique en entrée.

5. Dispositif selon l'une quelconque des revendications précédentes, caractérisé en ce que le dispositif traite les signaux numériques audiofréquence et ledit dispositif comprend de plus un moyen d'interface (15) comportant :

un moyen de registre (41) dans lequel est entrée la donnée numérique qui est appliquée de l'extérieur en conformité avec un signal de commande qui est appliqué de l'extérieur,

un moyen de maintien (42) qui conserve séquentiellement une pluralité de données numériques qui sont entrées dans ledit moyen de registre et envoie ladite pluralité de données numériques sur ladite paire de bus de données en conformité avec un signal représentatif de la fin du transfert des données qui sont appliquées de l'extérieur, et

un moyen de registre de sortie (44) qui conserve les données traitées qui sont envoyées sur ladite paire de bus de données et sort les données traitées à l'extérieur.

6. Dispositif selon la revendication 5, caractérisé en ce que ledit moyen de commande (20) comporte un moyen de compteur de boucles (40) destine à commander le nombre de fois où une instruction est exécutée, destinée à envoyer les données numériques à partir du moyen de maintien dudit moyen d'interface (15) sur ladite paire de bus de donnees (11) et en ce que le dispositif comprend de plus

un moyen de registre de commande de mémoire (18) qui est connecté à un bus de données ou aux deux bus de données de ladite paire de bus de données et commande l'opération de mémorisation desdites première et seconde mémoires vives respectives (21, 22), et

les données numériques qui sont initialement envoyées à partir dudit moyen de conservation (42) dudit moyen d'interface (15) sont conservées dans lesdits premier et/ou second pointeurs d'adresse (24, 25), dans le moyen de compteur de boucles et dans le moyen de registre de commande de mémorisation.

7. Dispositif selon l'une quelconque des revendications précédentes, caractérisé en ce que ledit dispositif comprend de plus un moyen d'échange de données numériques (17) qui est prévu entre ladite paire de bus de données, ledit moyen d'échange de données numériques comportant :

un premier moyen de registre (17a) qui conserve les données numériques qui sont envoyées sur un desdits bus de données et sort les mêmes sur l'autre desdits bus de données, et

un second moyen de registre (17b) qui conserve les données numériques qui sont envoyées sur l'autre desdits bus de données et sort les mêmes sur le premier desdits bus de données,

dans lequel les premier et second moyens de registre sont mis en oeuvre simultanément.

8. Dispositif selon l'une quelconque des revendications précédentes, dans lequel ledit moyen de commande comporte :

un moyen de mémoire de programme (32) qui mémorise un programme qui est constitué d'une combinaison de codes d'instructions,

un moyen de compteur d'instructions (33) qui désigne une adresse dudit moyen de mémoire de programme,

un moyen de décodeur (34) qui décode les codes d'instructions extraits dudit moyen de mémoire de programme et sort des signaux de commande,

un moyen de registre d'adresse de branchement (37, 38) qui est relié à un bus de données ou aux deux bus de données de ladite paire des bus de données dans lequel des données d'adresse de branchement sont établies, et

un moyen de multiplexeur (39) qui applique sélectivement l'adresse qui est établie dans ledit moyen de registre d'adresse de branchement audit moyen de compteur d'instruction, d'où il résulte que les données d'adresse de l'adresse de branchement peuvent être établies à partir de l'extérieur.

9. Dispositif selon la revendication 8, dans lequel ledit moyen de commande comporte un moyen (34, JMP) pour valider ledit moyen de registre d'adresses de branchement lorsqu'une instruction de branchement doit être exécutée ou lorsqu'une instruction de branchement conditionnelle doit être exécutée.

10. Dispositif selon l'une quelconque des revendications précédentes, comprenant de plus un moyen de commande de branchement conditionnel (19) qui comporte :

une pluralité de paires de moyens d'indicateurs (56 à 59) qui sont positionnés lorsque les résultats dudit multiplicateur et/ou de l'unité arithmétique et logique ont atteint une condition prédéterminée,

un moyen de registre d'établissement de condition (55) relié à un bus de données ou aux deux bus de données de ladite paire de bus de données, et

un moyen de sélection (60) pour sélectionner les sorties de ladite pluralité de paires des moyens d'indicateurs en conformité avec le contenu dudit moyen de registre d'établissement de condition afin de sortir un signal de commande de branchement vers ledit moyen de commande.

11. Dispositif selon l'une quelconque des revendications précédentes, caractérisé en ce que ledit dispositif est formé en tant que filtre numérique pour des signaux numériques audiofréquence, dans lequel chacun desdits premier et second pointeurs d'adresse dans chaque moyen de traitement numérique de ladite paire de moyen de traitement numérique comporte une fonction pour adresser de façon cyclique une mémoire vive correspondante parmi lesdites première et seconde mémoires vives avec une adresse prédéterminée et une adresse établie variable.

12. Procédé pour mettre en oeuvre un filtre numérique passe bande à basse fréquence du type IIR (réponse impulsionnelle infinie) en utilisant le dispositif de la revendication 11, caractérisé en ce que

chacun des coefficients dudit filtre numérique est converti à l'avance sous la forme $\alpha + \beta \cdot \delta$, dans lequel $\alpha$ est un nombre entier le plus proche dudit coefficient dudit filtre numérique, $\delta$ est un coefficient commun ($\delta \ll 1$) et $\beta$ est le quotient de la division de la différence entre ledit coefficient dudit filtre numérique et ledit $\alpha$ par le coefficient commun et lesdits $\alpha$, $\beta$ et $\delta$ sont mémorisés dans ladite seconde mémoire vive,

l'opération de produit et de somme du coefficient respectif $\beta$ concernant lesdites données est effectuée,

le résultat de ladite opération de produit et de somme est multiplié par le coefficient commun $\delta$,

l'opération de produit et de somme du coefficient respectif $\alpha$ concernant lesdites données est effectuée, et

l'addition ou la soustraction du résultat de la multiplication et du résultat de l'opération de ladite opération de produit et de somme du coefficient $\alpha$ concernant lesdites données est effectuée afin d'obtenir une sortie du filtre numérique.

FIG.1

# F I G. 2

# F I G. 3

# FIG.4

# FIG.5

EXTERNAL STORAGE

CYCLIC STORAGE AREAS

# FIG.6

COMPOSITE DATA

MSB — LSB

NUMBER OF DATA TO LOOP COUNTER

L, R TO STORAGE CONTROL REGISTER

ADDRESS DATA TO ADDRESS POINTER AP 2

FIG.7

F I G. 8

# FIG.9

| | MNEMONIC | OPERATION |
|---|---|---|
| MUL INSTRUCTION | MUL A-BUS | CONNECT DATA BUS TO INPUT A OF MULTIPLIER |
| | MUL A-DRAM | APPLY DATA FROM DATA RAM TO INPUT A OF MULTIPLIER |
| | MUL B-BUS | CONNECT DATA BUS TO INPUT B OF MULTIPLIER |
| | MUL B-CRAM | APPLY CONSTANT FROM CONSTANT RAM TO INPUT B OF MULTIPLIER |
| | MUL B-CROM | APPLY CONSTANT FROM CONSTANT ROM TO INPUT B OF MULTIPLIER |
| AP INSTRUCTION | AP1 INC | INCREMENT VALUE OF ADDRESS POINTER AP1 |
| | AP1 DEC | DECREMENT VALUE OF ADDRESS POINTER AP1 |
| | AP2 INC | INCREMENT VALUE OF ADDRESS POINTER AP2 |
| | AP2 CLEAR | CLEAR ADDRESS POINTER AP2 |
| | AP3 DEC | DECREMENT VALUE OF ADDRESS POINTER AP3 |
| OPERATION INSTRUCTION | ALU ADD | ADD MULTIPLIED RESULT TO CONTENT OF ACC, AND STORE IN ACC |
| | ALU THR | STORE MULTIPLIED RESULT IN ACC WITHOUT OPERATION BY ALU |
| | ALU SUB | SUBTRACT ONE INPUT FROM THE OTHER INPUT, AND STORE IN ACC |
| TRANSFER INSTRUCTION | ACCS | SEND DATA OF ACC ONTO DATA BUS |
| | TMP1S | SEND DATA OF TMP1 ONTO DATA BUS |
| | TMP2S | SEND DATA OF TMP2 ONTO DATA BUS |
| | TMP3S | SEND DATA OF TMP3 ONTO DATA BUS |
| | RAM1D | STORE DATA OF DATA BUS IN DATA RAM |
| | TMP1D | STORE DATA OF DATA BUS IN TMP1 |
| | TMP2D | STORE DATA OF DATA BUS IN TMP2 |
| | TMP3D | STORE DATA OF DATA BUS IN TMP3 |

EP 0 299 537 B1

# F I G. 10

# F I G. 11

STEP

| | | | | | | |
|---|---|---|---|---|---|---|
| 0 | MUL A-DRAM,B-CRAM ; | | ;AP1INC ;AP2INC ; | | | ; |
| 1 | MUL A-DRAM,B-CRAM ; ALU THR | | ;AP1INC ;AP2INC ; | | | ; |
| 2 | MUL A-BUS ,B-CRAM; ALU ADD | | ;AP1INC ;AP2INC ; | TMP1S | ;RAM1D | |
| 3 | MUL A-DRAM,B-CRAM; ALU ADD | | ;AP1INC ;AP2INC ; | | | ; |
| 4 | MUL A-DRAM,B-CRAM; ALU ADD | | ;AP1DEC ;AP2INC ; | | | ; |
| 5 | MUL A-DRAM B-CRAM; ALU ADD | | ;AP1INC ;AP2INC ; | | | ; |
| 6 | MUL A-DRAM,B-CRAM; ALU THR | | ;AP1INC ;AP2INC ; | ACCS | ;TMP2D | |
| 7 | MUL A-BUS ,B-CRAM; ALU ADD | | ;AP1INC ;AP2INC ; | TMP2S | ;RAM1D | |
| 8 | MUL A-DRAM,B-CRAM; ALU ADD | | ;AP1INC ;AP2INC ; | | | ; |
| 9 | MUL A-DRAM,B-CRAM; ALU ADD | | ;AP1INC ;AP2INC ; | | | ; |
| 10 | ; ALU ADD | ; | ; | ; | | ; |
| 11 | ; | | ;AP1INC ; | | ; ACCS | ;RAM1D |

EP 0 299 537 B1

# F I G. 12

**DATA RAM**

| ADDRESS | (A) | ACCESSING ORDER | (B) | ACCESSING ORDER | (C) | ACCESSING ORDER | (D) | ACCESSING ORDER |
|---|---|---|---|---|---|---|---|---|
| 0 | $X_{i-2}$ | 1 | $X_{i-2}(\leftarrow Z_i)$ | 11 | $Z_i$ | 10 | $Z_i$ | 9 |
| 1 | $X_{i-1}$ | 2 | $X_{i-1}$ | 1 | $X_{i-1}(\leftarrow Z_{i+1})$ | 11 | $Z_{i+1}$ | 10 |
| 2 | $Y_{i-3}(\leftarrow X_i)$ | 3 | $X_i$ | 2 | $X_i$ | 1 | $Z_i \ (\leftarrow Z_{i+2})$ | 11 |
| 3 | $Y_{i-2}$ | 4,6 | $Y_{i-2}(\leftarrow X_{i+1})$ | 3 | $X_{i+1}$ | 2 | $X_{i+1}$ | 1 |
| 4 | $Y_{i-1}$ | 5,7 | $Y_{i-1}$ | 4,6 | $Y_{i-1}(\leftarrow X_{i+2})$ | 3 | $X_{i+2}$ | 2 |
| 5 | $Z_{i-3}(\leftarrow Y_i)$ | 8 | $Y_i$ | 5,7 | $Y_i$ | 4,6 | $Y_i \ (\leftarrow X_{i+3})$ | 3 |
| 6 | $Z_{i-2}$ | 9 | $Z_{i-2}(\leftarrow Y_{i+1})$ | 8 | $Y_{i+1}$ | 5,7 | $Y_{i+1}$ | 4,6 |
| 7 | $Z_{i-1}$ | 10 | $Z_{i-1}$ | 9 | $Z_{i-1}(\leftarrow Y_{i+2})$ | 8 | $Y_{i+2}$ | 5,7 |

**CONSTANT RAM**

| ADDRESS | (A) | ACCESSING ORDER | (B) | ACCESSING ORDER | (C) | ACCESSING ORDER | (D) | ACCESSING ORDER |
|---|---|---|---|---|---|---|---|---|
| 0 | C | 1 | C | 1 | C | 1 | C | 1 |
| 1 | B | 2 | B | 2 | B | 2 | B | 2 |
| 2 | A | 3 | A | 3 | A | 3 | A | 3 |
| 3 | E | 4 | E | 4 | E | 4 | E | 4 |
| 4 | D | 5 | D | 5 | D | 5 | D | 5 |
| 5 | H | 6 | H | 6 | H | 6 | H | 6 |
| 6 | G | 7 | G | 7 | G | 7 | G | 7 |
| 7 | F | 8 | F | 8 | F | 8 | F | 8 |
| 8 | J | 9 | J | 9 | J | 9 | J | 9 |
| 9 | I | 10 | I | 10 | I | 10 | I | 10 |

EP 0 299 537 B1

F I G. 13

F I G. 14

# F I G. 15

STEP

| STEP | | | | | | |
|---|---|---|---|---|---|---|
| 0 | MUL A –DRAM,B-CRAM; | | ;AP1 INC | ;AP 2 INC ; | | ; |
| 1 | MUL A –DRAM,B-CRAM; ALU THR | | ;AP1 INC | ;AP2 INC ; | | ; |
| 2 | MUL A –BUS ,B-CRAM; ALU ADD | | ;AP1 INC | ;AP 2 INC | ; TMP 1S | ; RAM 1D |
| 3 | MUL A –DRAM,B-CRAM; ALU ADD | | ;AP1 INC | ;AP 2 INC ; | | ; |
| 4 | MUL A –DRAM,B-CRAM; ALU ADD | | ;AP1 DEC | ;AP2 INC ; | | ; |
| 5 | MUL A –DRAM,B-CRAM; ALU ADD | | ;AP1 INC | ;AP2 INC ; | | ; |
| 6 | MUL A –DRAM,B-CRAM; ALU THR | | ;AP1 INC | ;AP2 INC | ;ACCS | ; TMP 1D |
| 7 | MUL A –BUS ,B-CRAM; ALU ADD | | ;AP1 INC | ;AP 2 INC | ; TMP1S | ; RAM 1D |
| 8 | MUL A –DRAM,B-CRAM; ALU ADD | | ;AP1 INC | ;AP2 INC ; | | ; |
| 9 | MUL A –DRAM,B-CRAM; ALU ADD | | ;AP1 INC | ;AP 2 INC ; | | ; |
| 10 | | ;ALU ADD | ; | ; | ; | ; |
| 11 | | ;ALU SHIFT | ; | ; | ; | ; |
| 12 | | ;ALU ADD | ; | ; | ; TMP 3 S | ; |
| 13 | | ;ALU SUB | ; | ; | ; TMP 2 S | ; TMP 3 D |
| 14 | | ;ALU SUB | ; | ; | ; TMP 2 S | ; |
| 15 | | ;ALU ADD | ; | ; | ; TMP 1S | ; |
| 16 | | ; | ; | ; | ; ACCS | ; RAM 1D |
| 17 | | ;ALU SUB | ; | ; | ; TMP1S | ; |
| 18 | | ; | ;AP1 INC | ; | ;ACCS | ; TMP 2D |

EP 0 299 537 B1

ADDRESS (A)

**DATA RAM**

| Address | (A) | (B) | (C) | (D) |
|---|---|---|---|---|
| 0 | $X_{i-2}$ | $X_{i-2}$ (←$Z_i$) | $Z_i$ | $Z_i$ |
| 1 | $X_{i-1}$ | $X_{i-1}$ | $X_{i-1}$ (←$Z_{i+1}$) | $Z_{i+1}$ |
| 2 | $Y_{i3}$ (←$X_i$) | $X_i$ | $X_i$ | $X_i$ (← $_{i+2}$) |
| 3 | $Y_{i-2}$ | $Y_{i-2}$ (←$X_{i+1}$) | $X_{i+1}$ | $X_{i+1}$ |
| 4 | $Y_{i-1}$ | $Y_{i-1}$ | $Y_{i-1}$ (←$X_{i+2}$) | $X_{i+2}$ |
| 5 | $Z_{i-3}$ (←$Y_i$) | $Y_i$ | $Y_i$ | $Y_i$ (← $_{i+3}$) |
| 6 | $Z_{i-2}$ | $Z_{i-2}$ (←$Y_{i+1}$) | $Y_{i+1}$ | $Y_{i+1}$ |
| 7 | $Z_{i-1}$ | $Z_i$ | $Z_{i-1}$ (←$Y_{i+2}$) | $Y_{i+2}$ |

**CONSTANT RAM**

| Address | (A) | (B) | (C) | (D) |
|---|---|---|---|---|
| 0 | C | C | C | C |
| 1 | B | B | B | B |
| 2 | A | A | A | A |
| 3 | E | E | E | E |
| 4 | D | D | D | D |
| 5 | C | C | C | C |
| 6 | b | b | b | b |
| 7 | a | a | a | a |
| 8 | e | e | e | e |
| 9 | d | d | d | d |

| | (A) | (B) | (C) | (D) |
|---|---|---|---|---|
| TMP1 | $X_i$ ←$Y_i$ | $Y_i$←$X_{i+1}$←$Y_{i+1}$ | $Y_{i+1}$←$X_{i+2}$←$Y_{i+2}$ | $Y_{i+2}$←$X_{i+3}$ |
| TMP2 | $Y_{i-1}-Z_{i-1}$ | $Y_i-Z_i$ | $Y_{i+1}-Z_{i+1}$ | $Y_{i+2}-Z_{i+2}$ |
| TMP3 | $Y_{i-2}-Z_{i-2}$ | $Y_{i-1}-Z_{i-1}$ | $Y_i-Z_i$ | $Y_{i+1}-Y_{i+1}$ |

EP 0 299 537 B1

# F I G.17

F I G.18

PRIOR ART